# EUROPEAN PATENT SPECIFICATION

(11) **EP 3 456 137 B1**
(45) Date of publication and mention of the grant of the patent: **27.05.2020**
(21) Application number: 16778629.2
(22) Date of filing: 28.09.2016
(51) Int. Cl.: H04L 5/00, H04W 74/08, H04L 27/26

(54) **PHYSICAL RANDOM ACCESS CHANNEL (PRACH) DESIGN**
DESIGN EINES PHYSIKALISCHEN DIREKTZUGRIFFSKANALS (PRACH)
CONCEPTION DE CANAL PHYSIQUE D'ACCÈS ALÉATOIRE (PRACH)

(30) Priority: 12.05.2016 US 201662335539 P; 13.05.2016 US 201662336374 P
(43) Date of publication of application: 20.03.2019
(73) Proprietor: Intel IP Corporation, Santa Clara, CA 95054 (US)
(72) Inventor: YE, Qiaoyang, Fremont, California 94538 (US); JEON, Jeongho, San Jose, California 95120 (US); NIU, Huaning, Milpitas, California 95035 (US); BHORKAR, Abhijeet, Fremont, California 94555 (US)
(74) Representative: Lang, Johannes
(86) International application number: PCT/US2016/054181
(87) International publication number: WO 2017/196387

(56) References cited:
- US-A1- 2016 037 352
- INTEL CORPORATION: "PRACH Design for eLAA", 3GPP DRAFT; R1-162358, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080137, Retrieved from the Internet: URL:http://www.3gpp.org/ftp/tsg_ran/WG1_RL 1/TSGR1_84b/Docs/ [retrieved on 2016-04-02]
- ERICSSON: "PRACH Design for Enhanced LAA", 3GPP DRAFT; R1-163146, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080562, Retrieved from the Internet: URL:http://www.3gpp.org/ftp/tsg_ran/WG1_RL 1/TSGR1_84b/Docs/ [retrieved on 2016-04-02]
- ERICSSON: "Uplink Resource Allocation Design for Enhanced LAA", 3GPP DRAFT; R1-160994, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian's, Malta; 20160215 - 20160219 6 February 2016 (2016-02-06), XP051064478, Retrieved from the Internet: URL:http://www.3gpp.org/ftp/tsg_ran/WG1_RL 1/TSGR1_84/Docs/ [retrieved on 2016-02-06]

## Description

### BACKGROUND

Wireless mobile communication technology uses various standards and protocols to transmit data between a node (e.g., a transmission station) and a wireless device (e.g., a mobile device). Some wireless devices communicate using orthogonal frequency-division multiple access (OFDMA) in a downlink (DL) transmission and single carrier frequency division multiple access (SC-FDMA) in uplink (UL). Standards and protocols that use orthogonal frequency-division multiplexing (OFDM) for signal transmission include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems (e.g., Release 13 and earlier), the node can be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicates with the wireless device, known as a user equipment (UE). The downlink (DL) transmission can be a communication from the node (e.g., eNodeB) to the wireless device (e.g., UE), and the uplink (UL) transmission can be a communication from the wireless device to the node.

Document US 2016/037352 A1 (WEI YONGBIN [US] ET AL) 4 February 2016 (2016-02-04), document "PRACH Design for eLAA", INTEL CORPORATION, RAN WG1, Busan, Korea; 2 April 2016 (2016-04-02), document "PRACH Design for Enhanced LAA", ERICSSON, RAN WG1 Busan, Korea; 2 April 2016 (2016-04-02), and document "Uplink Resource Allocation Design for Enhanced LAA", ERICSSON, RAN WG1, St Julian's, Malta; 6 February 2016 (2016-02-06) describe use of an interlace of resources for satisfying bandwidth occupancy requirements on an unlicensed band in a listen-before-talk (LBT) scenario.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1 illustrates a physical random access channel (PRACH) transmission in a special subframe in accordance with an example;
FIG. 2 illustrates a physical random access channel (PRACH) symbol structure in accordance with an example;
FIG. 3 illustrates another physical random access channel (PRACH) symbol structure in accordance with an example;
FIG. 4 illustrates yet another physical random access channel (PRACH) symbol structure in accordance with an example;
FIG. 5 illustrates a further physical random access channel (PRACH) symbol structure in accordance with an example;
FIG. 6 illustrates yet a further physical random access channel (PRACH) symbol structure in accordance with an example;
FIG. 7 depicts functionality of an eNodeB operable to configure a physical random access channel (PRACH) for a user equipment (UE) in accordance with an example;
FIG. 8 depicts functionality of an eNodeB operable to configure a physical random access channel (PRACH) for a user equipment (UE) in accordance with an example;
FIG. 9 depicts a flowchart of a machine readable storage medium having instructions embodied thereon for configuring a physical random access channel (PRACH) for a user equipment (UE) in accordance with an example;
FIG. 10 illustrates a diagram of a wireless device (e.g., UE) and a base station (e.g., eNodeB) in accordance with an example; and
FIG. 11 illustrates a diagram of a wireless device (e.g., UE) in accordance with an example.

Reference will now be made to the exemplary embodiments illustrated, and specific language will be used herein to describe the same. It will nevertheless be understood that no limitation of the scope of the technology is thereby intended.

### DETAILED DESCRIPTION

Before the present technology is disclosed and described, it is to be understood that this technology is not limited to the particular structures, process actions, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

The invention is defined by the independent claims. Further embodiments of the invention are described in the dependent claims. Any "aspect", "embodiment", or "example" described in the following and not falling within the scope of the claimed invention thus defined is to be interpreted as background information provided to facilitate the understanding of the claimed invention.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

The explosive growth in wireless traffic has led to a demand for rate improvement. However, with mature physical layer techniques, further improvement in spectral efficiency has been marginal. In addition, the scarcity of licensed spectrum in the low frequency band results in a deficit in the data rate boost. There are emerging interests in the operation of LTE systems in unlicensed spectrum. In 3GPP LTE Release 13, one enhancement has been to enable operation in the unlicensed spectrum via licensed-assisted access (LAA). LAA can expand the system bandwidth by utilizing a flexible carrier aggregation (CA) framework, as introduced in the LTE-Advanced system (3GPP LTE Release 10 system). Release 13 LAA focuses on the downlink (DL) design, while Release14 enhanced LAA (or eLAA) focuses on the uplink (UL) design. Enhanced operation of LTE systems in the unlicensed spectrum is expected in Fifth Generation (5G) wireless communication systems. In one example, LTE operation in the unlicensed spectrum can be achieved using dual connectivity (DC) based LAA. In DC based LAA, an anchor deployed in the licensed spectrum can be utilized. In another example, Release 14 describes that LTE operation in the unlicensed system can be achieved using a MuLTEfire system, which does not utilize an anchor in the licensed spectrum. The MuLTEfire system is a standalone LTE system that operates in the unlicensed spectrum. Therefore, Release 14 eLAA and MuLTEfire systems can potentially be significant evolutions in future wireless networks.

In one example, the unlicensed frequency band of current interest for 3GPP systems is the 5 gigahertz (GHz) band, which has wide spectrum with global common availability. The 5 GHz band in the United States is governed using Unlicensed National Information Infrastructure (U-NII) rules by the Federal Communications Commission (FCC). The main incumbent system in the 5 GHz band is the wireless local area networks (WLAN), specifically those based on the IEEE 802.11 a/n/ac technologies. WLAN systems are widely deployed both by individuals and operators for carrier-grade access service and data offloading. Therefore, listen-before-talk (LBT) in the unlicensed spectrum is a mandatory feature in the Release 13 LAA system, which can enable fair coexistence with the incumbent system. LBT is a procedure in which radio transmitters first sense the medium, and transmit only if the medium is sensed to be idle.

The regulations for usage of the unlicensed spectrum can vary based on region. For example, the European Telecommunications Standards Institute (ETSI) in the European Union specifies that an occupied channel bandwidth (OCB) is to be between 80% and 100% of a declared nominal channel bandwidth. In other words, a transmitter is to transmit a signal by occupying between 80% and 100% of the system bandwidth. For example, when the system operates with a total bandwidth of 10 MHz, each transmission is to occupy at least 8 MHz. The regulations on the maximum power spectral density are typically stated with a resolution bandwidth of 1 megahertz (MHz). The ETSI specification defines a maximum power spectral density (PSD) of 10 decibel-milliwatts (dBm)/MHz for 5150-5350 MHz. The FCC has a maximum PSD of 11 dBm/MHz for 5150-5350 MHz. A 10 kilohertz (KHz) resolution can be utilized for testing the 1 MHz PSD constraint and, therefore, the maximum PSD constraint can be satisfied in an occupied 1MHz bandwidth. In addition, the regulations impose a band specific total maximum transmission power in terms of equivalent isotropically radiated power (EIRP), e.g., ESTI has an EIRP limit of 23 dBm for 5150 - 5350 MHz.

In one example, there exists a regulation for an exception use case which does not necessitate satisfaction of the 80% OCB regulation, as described above. In this regulation, during an established communication, a device may be allowed to operate temporarily with an occupied channel bandwidth below 80% of its nominal channel bandwidth with a minimum of 2 MHz.

### PRACH Waveform Design in eLAA and MuLTEfire Systems

In one example, an LAA uplink design can abide by the regulations, as previously described. In order to satisfy the regulation regarding the occupied channel bandwidth (i.e., an OCB between 80% and 100%), previous subband-based UL scheduling techniques are to be updated, unless one UE is assigned for the entire bandwidth. In one example, a multi-cluster transmission can be supported in eLAA systems, where user data can be placed over interlaced resource blocks (RBs) and frequency multiplexed. Specifically, one interlace can include 10 RBs for systems with 20MHz. A cluster can consist of 1 RB, and thus one interlace can have 10 clusters for 20MHz, e.g. Block Interleaved Frequency Division Multiple Access (B-IFDMA) waveform.

In one example, the physical random access channel (PRACH) can be used for scheduling requests (SR), uplink (UL) synchronization and power control for an initial UL transmission in legacy LTE systems. A functionality of the PRACH for eLAA systems is the UL synchronization, while the PRACH in MuLTEfire systems functions for SR, UL synchronization and power control.

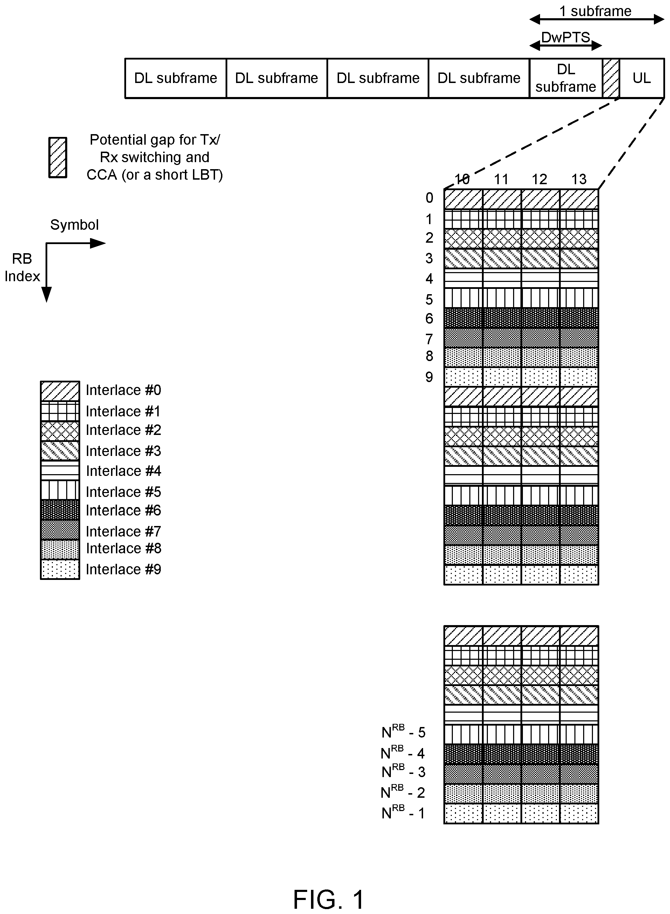

FIG. 1 illustrates an exemplary physical random access channel (PRACH) transmission in a special subframe. The PRACH can utilize a B-IFDMA waveform, in part, to satisfy an occupied channel bandwidth (OCB) regulation (e.g., the OCB is to be between 80% and 100% system bandwidth). In eLAA and MuLTEfire systems, an UL portion of the special subframe can be used for the PRACH transmission. In a specific example, an uplink pilot time slot (UpPTS) region or an extended UpPTS region occupying a last four OFDM symbols of the special subframe can be used for the PRACH transmission. Alternatively, the PRACH can be transmitted over a regular UL subframe, which can be beneficial for large cells.

As shown in FIG 1, the special subframe can include a DL portion and an UL portion. The first N symbols in the special subframe can be used for DL transmissions, wherein N is an integer. There can be a gap between the DL portion and the UL portion, which enables a transmitter to switch between a DL reception and an UL transmission. As shown, the PRACH can be transmitted during the UL portion of the special subframe. In the example shown, the PRACH can utilize 4 symbols, but a different number of symbols can be used for the PRACH as well.

The PRACH can be transmitted using an interlaced subframe structure, such as a B-IFDMA subframe structure, to satisfy the OCB regulation. A total system bandwidth can be separated into multiple interlaces. For example, a 20 MHz system can be separated into 10 interlaces. One interlace can include 10 resource blocks (RBs). Interlace #0 can occupy RB 0, 10, 20 and so on. Interlace #1 can occupy RB 1, 11, 21 and so on. Here, the total occupied bandwidth can be from 0 to 90 RBs, which is more than 80% of the total system bandwidth (which satisfies the OCB regulation). By interlacing, the bandwidth usage can be increased to at least 80%. However, it may be wasteful for a single UE to occupy a continuous 80%. Rather, one interlace can be allocated per UE, or multiple interlaces can be allocated for a particular UE.

In one example, a target cell size for small cell deployments can be between 200-300 meters. The transmissions from different UEs in a small cell can arrive at an eNodeB within a cyclic prefix (CP) duration. Therefore, transmissions on different interlaces are orthogonal, and there is no inter-interlace interference. However, for large cell deployments, a transmission arrival time at the eNodeB from different UEs can have relatively large disparities, e.g., larger than the CP duration. As a result, the orthogonality can be lost among transmissions on different interlaces, thereby resulting inter-interlace interference.

As described in further detail below, a novel PRACH design can function to overcome the inter-interlace interference for large cell deployment. The novel PRACH design can be applicable to eLAA and MuLTEfire systems, and the novel PRACH design can utilize an interlace subframe structure, e.g., B-IFDMA, to satisfy the OCB regulation. In one configuration, the novel PRACH design can extend the CP duration, such that the CP duration is larger than a transmission delay among different transmissions. When multiple UEs transmit to the same eNodeB, the UEs can be in different locations. For example, a first UE can be at a cell center and a second UE can be at a cell edge. The propagation delay between the first and second UEs can be relatively far apart. By ensuring that the time difference between these two propagation delays is within the CP duration, interference can be reduced among the UEs. If the time delay exceeds the CP duration, interference can occur from different UEs. Therefore, the CP duration can be extended to ensure that the reception of each UE transmission is within the CP duration.

In one configuration, the PRACH preamble from legacy LTE systems can be extended. Similar to the PRACH design in legacy LTE systems, a subcarrier spacing can be reduced. For example, a PRACH format similar to PRACH preamble format 0 in legacy LTE systems can be transmitted over a regular UL subframe. The CP duration of PRACH preamble format 0 is 103.13 micro seconds (µs), which can be applied to cells with a radius of about 14 kilometers (km) (e.g., with a maximal delay spread of 6.25 µs). In another example, PRACH format 4 in legacy LTE systems can be used as the baseline. The subcarrier spacing of the PRACH can be 7.5 kHz, and the CP duration is 14.6 µs, which can be applied to cells with a radius of at least 1km. Given that the duration of PRACH format 4 is about 2 OFDM symbols with a subcarrier spacing of 15 kHz, the PRACH preamble symbol can be repeated over the time domain when transmitted over a regular UL subframe.

In one example, a guard band can be utilized for the PRACH transmission when frequency multiplexed with other transmissions (e.g., a PUSCH transmission from another UE). When the PRACH is frequency multiplexed with transmissions using different subcarrier spacing, guard bands at the two ends of each resource block (RB) within an interlace can be utilized to reduce interference to/from the transmissions in surrounding interlaces. The number of subcarriers to leave blank as the guard band can depend on the cell size, as well as operation preferences with respect to the tradeoff of performance loss due to overhead caused by the guard band. As an example, 15 kHz at each end of each RB can be left blank. Alternatively, in the special subframe of eLAA systems, no guard band can be utilized when all interlaces are used for PRACH transmissions with the same subcarrier spacing (e.g. 7.5 kHz).

In one configuration, the PRACH waveform can have the same subcarrier spacing as the PUSCH (i.e., 15 kHz). Within every 2 symbols, a preceding symbol within these 2 symbols can be performed as a CP for the following symbol.

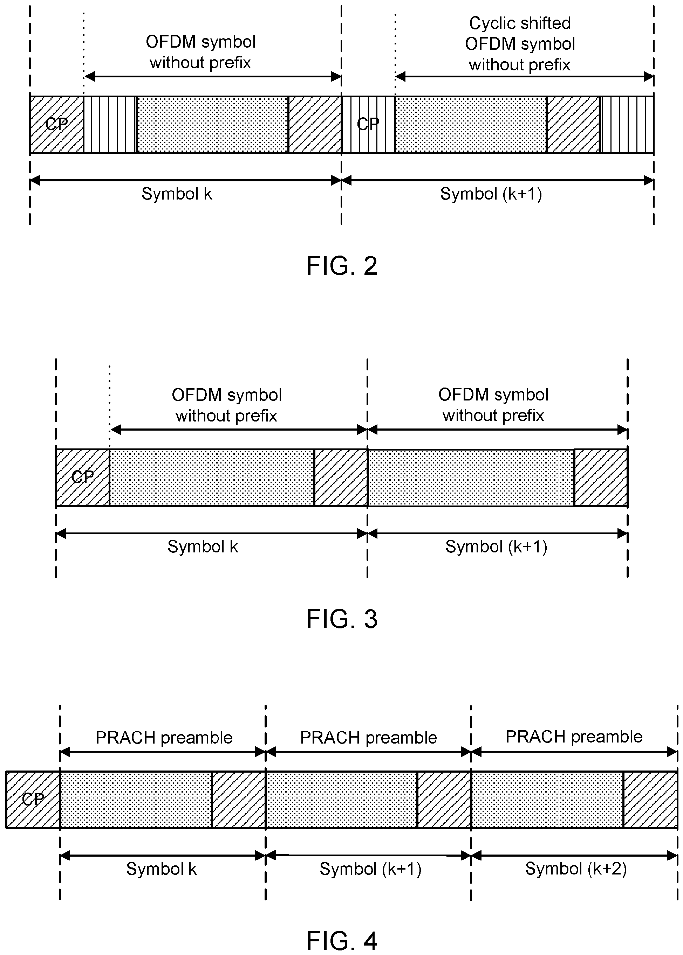

FIG. 2 illustrates an example of a physical random access channel (PRACH) symbol structure. As shown, the PRACH symbol structure can include symbol k and symbol (k+1). Symbol (k+1) can be a cyclic shifted version (in the time domain) of symbol k, where k ∈ {0, 2, 4, 6, 8, 10, 12} when the PRACH is transmitted over a regular UL subframe and k ∈ {0, 2} or k=0 when the PRACH is transmitted over a special subframe. In this example, the symbol k can be used as a CP. For instance, by truncating with a length of an OFDM symbol without prefix, the obtained part is a cyclic shifted version of the OFDM symbol without prefix. In other words, the OFDM symbol without prefix in symbol (k+1) is a cyclic shifted version of the OFDM symbol without prefix in symbol k. In this example, in addition to the regular CP overhead as in legacy LTE systems, every other symbol is also an overhead. At the receiver side, the eNodeB can obtain one Fast Fourier Transform (FFT) duration within every 2 FFT durations for detection. The CP duration can be predefined (e.g., to be the same as the CP duration in PUSCH), or the CP duration can be configured via radio resource control (RRC) RRC signaling.

FIG. 3 illustrates an example of a physical random access channel (PRACH) symbol structure. As shown, the OFDM symbol without prefix in symbol k+1 can be the same as the OFDM symbol without prefix in symbol k, where k ∈ {0, 2, 4, 6, 8, 10, 12} when the PRACH is transmitted over a regular UL subframe and k ∈ {0, 2} or k=0 when the PRACH is transmitted over a special subframe. In this case, the first symbol duration can be used as a CP, and thus can help overcome the inter-interlace interference. The CP duration can be predefined, e.g., the CP duration in the first symbol can be the same as the CP duration in PUSCH, or twice the CP duration in PUSCH in order to align the symbol boundary of every two symbols. Alternatively, the CP duration can be configured via RRC signaling.

In one example, when the CP duration in symbol k is the same as in legacy LTE systems, the symbol boundary may not be aligned with other channels (e.g., PUSCH). Given that the total duration of n symbols can be shorter than the total duration of n symbols in legacy LTE systems, the additional time can be left blank (i.e., no transmission) and used as a guard period. Alternatively, the CP duration in symbol k can be twice the CP duration in legacy LTE systems. In this case, the symbol boundary of every 2 symbols can be aligned with other channels (e.g., PUSCH). The total duration of 2n with n ∈ {1, 2, ...,7} symbols can be the same as the total duration of 2n symbols in legacy LTE systems.

FIG. 4 illustrates an example of a physical random access channel (PRACH) symbol structure. Similar to PRACH formats 2 and 3 in legacy LTE systems where the PRACH symbols are repeated, the PRACH in eLAA and MuLTEfire systems can also be repeated multiple times to enhance the coverage. As shown, the PRACH transmission can include a CP and several repeated PRACH preamble symbols, where the CP duration depends on a maximal delay spread and a maximal round trip delay. In other words, the repeated PRACH preamble symbols (e.g., 3 repeated preambles) can follow the CP duration, which can depend on the maximal delay spread and cell size. The number of preamble repetitions can depend on a desired coverage area. The CP duration can be predefined (e.g., 103.13us which is the same as PRACH format 0 in legacy LTE), or configured via RRC signaling.

In one example, different predefined CP durations can be utilized. For example, the CP can be the same as a legacy LTE CP in a first design, the CP can be twice that of the legacy LTE CP in a second design, or the CP can be dependent on a round trip delay and channel delay spread for a third design, e.g., which can be the same as the CP for the legacy PRACH format 0/4.

With respect to the PRACH design options described above, either a subset or all of the PRACH design options can be supported in eLAA and MuLTEfire systems.

In one example, two formats can be supported in eLAA systems. A first format can have a subcarrier spacing of 7.5 kHz, and can be transmitted over a special subframe (e.g., UpPTS region). This format can be transmitted without frequency multiplexing of other channels with different subcarrier spacing, which can reduce ICI and limit the number of guard subcarriers. A second format can have a subcarrier spacing of 15 kHz, and can be transmitted over a regular UL subframe. This format can be frequency multiplexed with other transmissions (e.g., PUSCH) without the guard band.

With respect to a PRACH preamble sequence design, in one configuration, the sequence designed in the legacy LTE system can be reused. The sequence can be repeated or truncated to fit into the number of REs that are allocated for the PRACH transmission. For example, the sequence length of PRACH format 4 in legacy LTE systems is 139. To extend this sequence to be used with 10 PRBs allocated for the PRACH, the sequence can be repeated to fit into (240-N_guard) REs, where N_guard is the number of guard subcarriers for reducing ICI when transmissions with different subcarrier spacing are multiplexed over the frequency domain. In another configuration, a new sequence can be designed with desirable length. For example, a new set of Zadoff-Chu (ZC) sequences with desirable lengths can be designed. A set of ZC sequences with length of (240-N_guard) can be defined, or a set of ZC sequences with length of 120 can be defined.

With respect to a resource allocation and its indication for the PRACH transmission, in one configuration, the PRACH can be transmitted over a remaining part following a downlink pilot time slot (DwPTS) of the special subframe. The UpPTS region can be used for the PRACH transmission. Moreover, the UpPTS region can be extended to be more than 2 symbols (e.g., 4 symbols) for the PRACH transmission. In one example, symbols 10 and 11 can be used for the PRACH transmission, while symbol 12 is blanked as an LBT gap for SRS transmission in symbol 13.

In another configuration, a contention-free PRACH process can be supported in eLAA systems. A PDCCH order can be used to indicate the PRACH preamble sequence. For the time indication, the PDCCH order can be used to indicate when to transmit the PRACH, which can be either explicit or implicit. For an implicit indication, a fixed timing relationship between a reception of the PDCCH order and a transmission of the PRACH can be predefined (e.g., 4 or 6 subframes between the PDCCH order and PRACH transmission). Alternatively, the timing resource can be semi-statically configured via RRC signaling. For the frequency resource indication, the frequency resources for the PRACH transmission can be semi-statically configured via RRC signaling, or dynamically indicated via the PDCCH order for the contention-free PRACH process.

In one example, UE multiplexing can be performed based on the cyclic shift (CS). However, not all possible CSs may be usable. The CS value can be larger than the maximal delay spread plus the maximal round-trip delay. In another example, UE multiplexing can be performed based on an orthogonal cover code (OCC). For example, when the number of PRACH symbols is N, an OCC with length N can be applied. As another example, when the number of transmitted PRACH preambles is N, an OCC with a length of N/2 can be applied, rather than applying N. The OCC for symbol k and k+1 with k ∈ {0, 2, 4, 6, 8, 10, 12} can be the same.

With respect to a listen-before-talk (LBT) technique, in one example, for PRACH transmissions over special subframes, a single-shot LBT can be performed. In another example, for PRACH transmissions over regular UL subframes, the LBT technique can follow the LBT technique for regular PUSCH transmissions. Specifically, when the PRACH transmission is within a transmit opportunity (TxOP), no LBT can be performed or a single-shot LBT can be performed. No LBT is applied when the PRACH transmission is within 16us after an end of a preceding DL transmission. If the PRACH transmission is outside the TxOP, Category 4 (Cat-4) LBT can be performed. If symbol blanking is utilized for the LBT gap, 2 symbols can be blanked, or 1 symbol can be blanked in for LBT. Alternatively, a single-shot LBT can be performed for PRACH regardless of whether it is within the special subframe or a regular UL subframe.

In one configuration, a timing estimation ambiguity issue caused by an equidistant B-IFDMA waveform can be resolved. The equidistant B-IFDMA can result in multiple peaks in a correlation profile of the PRACH, which can lead to ambiguity in the timing estimation and impact timing advance (TA) functionality. To resolve this issue, in one example, a randomized irregular interlace structure can be utilized. The RBs within each interlace can be irregular. In another example, an interlace can be shared among multiple UEs. One interlace can be frequency multiplexed with N UEs (e.g., N=2), where the 10 PRBs within one interlace can be randomly separated into N parts and allocated to these N UEs, such that a non-equidistant RB pattern can be created. In addition, N interlaces (e.g., N=2) can be shared with M UEs (e.g., M=2), where RBs in each interlace can be randomly separated into M parts and allocated to these M UEs. In total, each UE can be allocated with 10N/M RBs. The generated RB pattern for each UE can be irregular, which can reduce the ambiguity in timing estimation.

In one configuration, a PRACH design is provided for eLAA and MuLTEfire systems. The PRACH design can include a design of a PRACH waveform, format, and resource allocation, as well as a technique for resolving a timing estimation ambiguity issue. In one example, similar to the PRACH design in legacy LTE (e.g., PRACH preamble format 0/4), subcarrier spacing can be reduced and an increased sequence can be utilized. In another example, the PRACH preamble based on format 4 can be repeated multiple times in a time domain to fit into an allocated time resource. In yet another example, a guard band can be utilized within each resource block (RB) of the interlace to reduce interference to/from transmissions in surrounding interlaces, and the PRACH can be frequency multiplexed with transmissions using different subcarrier spacing. In a further example, the number of subcarriers in the guard band can depend on a cell size, as well as operation preference (e.g., a tolerable performance loss due to an overhead caused by the guard band). For example, 15 kHz can be left blank at each end of every RB within an interlace to reduce inter-cell interference (ICI). In yet a further example, the guard band may not be utilized when all interlaces are used for the PRACH transmission with the same subcarrier spacing (e.g., 7.5 kHz).

In one example, the PRACH can have the same subcarrier spacing as the PUSCH (i.e. 15 kHz). In another example, every other symbol can be used to carry the PRACH preamble, and remaining symbols can be a cyclic shifted version of other symbols used as a "long" cyclic prefix. For example, symbol (k+1) can be a cyclic shifted version of symbol k, where k ∈ {0, 2, 4, 6, 8, 10, 12} when the PRACH is transmitted over a regular UL subframe and k ∈ {0, 2} or k=0 when the PRACH is transmitted over a special subframe. In yet another example, every other symbol can repeat a previous symbol without the CP, i.e., symbol (k+1) can be the same as symbol k without the CP, for k ∈ {0, 2, 4, 6, 8, 10, 12} when the PRACH is transmitted over a regular UL subframe and k ∈ {0, 2} or k=0 when the PRACH is transmitted over a special subframe. In a further example, a CP duration of symbol k ∈ {0, 2, 4, 6, 8, 10, 12} can be either the same as legacy LTE (e.g. 47µs), or can be twice of the CP duration in legacy LTE, where a symbol boundary of every 2 symbols can be aligned with other channels (e.g., PUSCH) when the CP duration is twice the CP duration in legacy LTE. In yet a further example, similar to PRACH formats 2 and 3 in legacy LTE in which the PRACH symbols are repeated, the PRACH in eLAA and MuLTEfire systems can also be repeated multiple times to enhance coverage. In one aspect, the PRACH transmission can include a CP and several repeated PRACH preamble symbols, where the CP duration can depend on a maximal delay spread and a maximal round trip delay, and the number of preamble repetition can depend on the coverage area. In another aspect, the CP duration can be predefined or configured via radio resource control (RRC) signaling.

In one example, the PRACH can utilize a Block Interleaved Frequency Division Multiple Access (B-IFDMA) structure, which can enable a multi-cluster transmission with each cluster including 1 physical resource block (PRB) and 10 clusters per interlace.

In one example, a PRACH preamble sequence can be based on a sequence designed in the legacy LTE, where the sequence can be repeated or truncated to fit into a number of resource elements (REs) that are allocated for PRACH transmission. In another example, a new sequence with desirable length can be designed, e.g., a set of Zadoff-Chu (ZC) sequences with a length of (240-N_guard) can be defined, wherein N_guard is the number of guard subcarriers utilized to achieve ICI reduction.

In one example, the PRACH can be transmitted over a remaining portion following a DwPTS of a special subframe, e.g., the UpPTS region can be used for the PRACH transmission, similar to LTE, or the special subframe can be extended to be more than 2 symbols (e.g., 4 symbols) for the PRACH transmission. In another example, when the UpPTS is extended to 4 symbols, a 4-symbol PRACH can be transmitted, or symbols 10 and 11 can be used for the PRACH transmission, while symbol 12 is blanked as an LBT gap for an SRS transmission in symbol 13. In yet another example, the PRACH can be transmitted in a regular UL subframe. In a further example, a PDCCH order can be used to indicate the PRACH preamble sequence for a contention-free PRACH process. In yet a further example, the PDCCH order can be extended to explicitly or implicitly indicate when to transmit the PRACH, or the PDCCH order can be semi-statically configured via RRC signaling. In one aspect, for implicit indication of the PDCCH order, a fixed timing relationship between a reception of the PDCCH order and the transmission of the PRACH can be predefined (e.g., 4 ms between the PDCCH order and the PRACH transmission, or 6 ms between the PDCCH order and the PRACH transmission, which is the legacy LTE minimal timing gap). Alternatively, the fixed timing relationship can be semi-statically configured via RRC signaling. In another example, the frequency resources for the PRACH transmission can be semi-statically configured via RRC signaling, or dynamically indicated via the PDCCH order for the contention-free PRACH process.

In one example, UEs can be multiplexed in the frequency domain via a cyclic shift (CS) and/or an orthogonal cover code (OCC). In another example, an OCC length can be the same as the number of PRACH preamble symbols. In yet another example, the OCC length can be half of the number of PRACH symbols, where the same OCC can be applied to symbol k and k+1 with k ∈ {0, 2, 4, 6, 8, 10, 12}.

In one example, for PRACH transmissions over a special subframe, a single-shot LBT can be performed, or no LBT can be performed when a gap between the PRACH transmission and an end of the preceding DL transmission is within 16us. In another example, for PRACH transmissions over a regular UL subframe, the LBT technique can follow the LBT technique utilized for regular PUSCH transmissions. Specifically, when the PRACH transmission is within a transmit opportunity (TxOP), single-shot LBT can be performed, or no LBT can be performed when the gap between the PRACH transmission and the end of the preceding DL transmission is within 16us. When the PRACH transmission is outside the TxOP, Category 4 (Cat-4) LBT can be performed. In yet another example, when symbol blanking is utilized for the LBT gap, 1 or 2 symbols can be blanked depending on the PRACH design.

In one example, an irregular RB pattern can be allocated to alleviate an ambiguity in timing estimation of an equidistant B-IFDMA structure. In another example, a random permutation of RBs within every interlace can be used. In yet another example, one interlace with equidistant RBs can be frequency multiplexed with N UEs (e.g., N=2), where the RBs within the same interlace can be randomly separated into N parts and allocated to these N UEs, such that a non-equidistant RB pattern is created. In a further example, N interlaces (e.g., N=2) with equidistant RBs can be shared with M UEs (e.g., M=2), where the RBs in each interlace can be randomly separated into M parts and allocated to these M UEs, such that an irregular RB pattern can be generated for each UE.

### PRACH Waveform Design with Continuous Resource Block (RB) Allocation in eLAA Systems

In one example, an LAA uplink design can abide by the regulations, as previously described. In order to satisfy the regulation regarding the occupied channel bandwidth (i.e., an OCB between 80% and 100%), previous subband-based UL scheduling techniques are to be updated, unless one UE is assigned for the entire bandwidth. In one example, a multi-cluster transmission can be supported in eLAA systems, where user data can be placed over interlaced resource blocks (RBs) and frequency multiplexed. Specifically, one interlace can include 10 RBs for systems with 20MHz. A cluster can consist of 1 RB, and thus one interlace can have 10 clusters for 20MHz, e.g. Block Interleaved Frequency Division Multiple Access (B-IFDMA) waveform.

In one example, the physical random access channel (PRACH) can be used for scheduling requests (SR), uplink (UL) synchronization and power control for an initial UL transmission in legacy LTE systems. A functionality of the PRACH for eLAA systems is the UL synchronization, while the PRACH in MuLTEfire systems functions for SR, UL synchronization and power control.

Due to the OCB regulation (e.g., the OCB is to be between 80% and 100% system bandwidth), the PRACH can utilize an interlaced structure, such as B-IFDMA. However, the interlaced structure can result in less accurate timing estimation as compared to the legacy PRACH with continuous PRBs. To improve the timing estimation, the regulation for the exception use case (i.e., a device can temporarily operate with an OCB below 80% with a minimum of 2 MHz) can be exploited. Specifically, a continuous RB allocation can be utilized for PRACH transmissions in eLAA, and the number of allocated continuous RBs can occupy at least 2 MHz. In addition, in order to satisfy power spectral density (PSD) criteria, the transmission scheme can be enhanced to compensate for the power back off utilized for continuous RB allocation

As previously described, during an established communication, a device can operate temporarily with an occupied channel bandwidth below 80% of its nominal channel bandwidth, and with a minimum of 2 MHz. In other words, the device can temporarily operate with an OCB below 80% of the total system bandwidth. Therefore, the PRACH transmission can occupy N continuous PRBs, e.g., N = 12, while occupying at least 2 MHz of bandwidth. As an example, if the PRACH transmission occupies 12 continuous PRBs (i.e., N=12), this is equal to approximately 2 MHz since 1 PRB is 180 kHz.

In one configuration, the PRACH waveform can be designed based on a continuous N RB allocation (e.g., N=12). In one example, the PRACH format 0 in legacy LTE systems can be considered as a baseline. For example, a PRACH subcarrier spacing can be the same as legacy PRACH format 0, i.e., 1.25 kHz. A CP duration of the PRACH preamble format 0 is 103.13 µs, which can be applied to cells with a radius about 14km (e.g., with maximal delay spread of 6.25 µs). In another example, the PRACH subcarrier spacing can be doubled to 2.5 kHz. Assuming the CP and guard time (GT) remain the same, the PRACH can be repeated twice to fit into one UL subframe.

In one example, the PRACH format 4 in legacy LTE systems can be considered as a baseline. For example, the subcarrier spacing of the PRACH can be 7.5 kHz, and the CP duration is 14.6 µs, which can be applied to cells with a radius of at least 1km. Given that the duration of PRACH format 4 is about 2 OFDM symbols with a subcarrier spacing of 15 kHz, the PRACH preamble symbol can be repeated over the time domain to fit into a regular UL subframe.

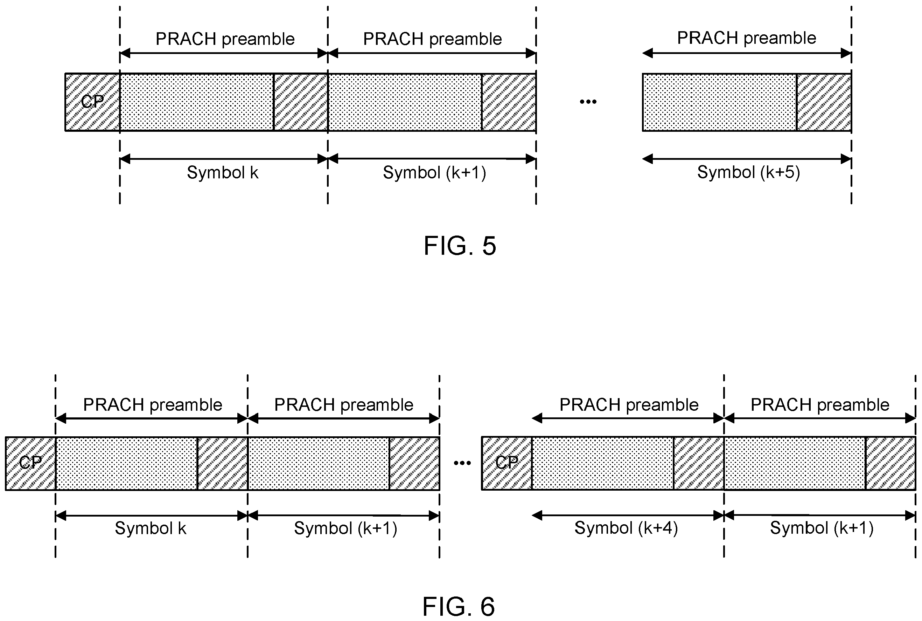

FIG. 5 illustrates an example of a physical random access channel (PRACH) symbol structure with a repeated preamble sequence in the time domain. The repeated PRACH preamble symbols can follow a CP duration, which can depend on a maximal delay spread and cell size. In this example, a subcarrier spacing can be doubled to 15 kHz, which is the same as PUSCH. With the same CP (i.e., 14.6 us) and GT (9.38 us), the PRACH preamble can be repeated 6 or 7 times to fit into one UL subframe

FIG. 6 illustrates an example of a physical random access channel (PRACH) symbol structure with a repeated preamble sequence in the time domain. In this example, a CP can occur every two symbols. The repeated PRACH preamble symbols can follow a CP duration, which can depend on a maximal delay spread and cell size. In other words, a transmission unit can include one CP, and two PRACH preamble symbols can be repeated multiple times over the time domain (e.g., 6 repetitions). In addition, when there is remaining time within a UL subframe besides the PRACH transmission (e.g., with 6 repetition of PRACH format 4), the remaining time can be used for LBT, SRS or an additional GT.

In one example, with continuous RB allocation, a first design can be based on the legacy PRACH format 0/4, in which the subcarrier spacing of 0/4 can be utilized. In a second design, the subcarrier spacing of the legacy PRACH format 0/4 can be doubled to fit the legacy 6-RB PRACH to a current 12-RB PRACH. In a third design, the subcarrier spacing can be 15kHz, and a set of new PRACH sequences can be designed. The guard band may be utilized when the subcarrier spacing is different from 15kHz.

In one configuration, the power back off for meeting the PSD regulation can be compensated. For example, given that the maximal transmission power within every 1MHz is limited to 10/11 dBm/MHz, with continuous RB allocation, power back off can be utilized to meet this regulation. In order to compensate for the power back off, repetition in the frequency domain or repetition in the time domain can be utilized. With respect to the repetition in the frequency domain, a set of N continuous PRBs (e.g., N=12) can be repeated in the frequency domain. With respect to the repetition in the time domain, when the PRACH duration is about 2 symbols, the PRACH can be repeated over the time domain for 6 or 7 times to fit into one UL subframe, or the PRACH can be repeated over the time domain to fit into two UL subframes. These repetitions can be transmitted over different sets of continuous RBs (i.e., frequency hopping) to achieve frequency diversity.

With respect to multiplexing with other channels, in one configuration, frequency multiplexing with the PUSCH or the PUCCH may not be supported. Alternatively, frequency multiplexing with the PUSCH or the PUCCH can be supported. In this case, the REs within an interlace, but overlapped with resources for the PRACH, can be reserved for the PRACH transmission. With frequency hopping of the PRACH, a plurality of REs can be reserved for PUSCH interlaces. The eNodeB can indicate the set of REs to be blank via the PDCCH. In another configuration, the PRACH transmission may utilize a guard band when the PRACH transmission is frequency multiplexed with other transmissions (e.g., a PUSCH transmission from another UE). In yet another configuration, the number of subcarriers to leave blank as the guard band can depend on the cell size, as well as operation preferences with respect to the tradeoff of performance loss due to overhead caused by the guard band, e.g., 15 kHz at one end of the RB and 22.5 kHz at the other end of the RB can be left blank, which is the same as legacy PRACH format 4.

With respect to the PRACH preamble sequence design, in one configuration, the sequence designed in the legacy LTE system can be reused. The sequence can be repeated or truncated to fit into the set of REs that are allocated for the PRACH transmission. For example, the sequence length of PRACH format 4 in legacy LTE systems is 139. When the PRACH uses a subcarrier spacing of 7.5kHz, the sequence can be repeated or truncated to fit into (24*N-N_guard) REs, where N_guard is the number of guard subcarriers for reducing ICI. In one example, the PRACH can be allocated with 12 PRBs. In this case, the legacy PRACH format 4 sequence can be repeated in the frequency domain to fit into 278 tones with a subcarrier spacing of 7.5 kHz, and 30 and 45 kHz can be left blank at the two ends of the allocated RBs, respectively. In another example, when the PRACH uses a subcarrier spacing of 15 kHz, the legacy PRACH format 4 can be used without modification. In this case, 30 and 45 kHz can be left blank at the two ends of the allocated RBs, respectively.

In another configuration, a new sequence with a desirable length can be designed. For example, a new set of Zadoff-Chu (ZC) sequences with desirable lengths can be designed. With continuous RB allocation and for a subcarrier spacing of 7.5kHz, a set of ZC sequences can be defined with a length being a largest prime number that is smaller than 24*N. For example, when N=12, the PRACH sequence can be one belonging to the set of ZC sequences with a length of 283. There can be 15 kHz and 22.5 kHz left blank at the two ends of the allocated resources, respectively. In one example, the ZC sequence with length of 139 can be used (i.e., reuse the PRACH format 4 sequences).

With respect to a resource allocation and its indication for the PRACH transmission, in one configuration, a contention-free PRACH process can be supported in eLAA systems. A PDCCH order can be used to indicate the PRACH preamble sequence. For the time indication, the PDCCH order can be used to indicate when to transmit the PRACH, which can be either explicit or implicit. For an implicit indication, a fixed timing relationship between a reception of the PDCCH order and a transmission of the PRACH can be predefined (e.g., 4 or 6 subframes between the PDCCH order and PRACH transmission). Alternatively, the timing resource can be semi-statically configured via RRC signaling. For the frequency resource indication, the frequency resources for the PRACH transmission can be semi-statically configured via RRC signaling, or dynamically indicated via the PDCCH order for the contention-free PRACH process.

In one example, UE multiplexing can be performed based on the cyclic shift (CS). However, not all possible CSs may be usable. The CS value can be larger than the maximal delay spread plus the maximal round-trip delay. In another example, UE multiplexing can be performed based on an orthogonal cover code (OCC). For example, when the number of PRACH symbols is N, an OCC with length N or N/2 can be applied.

In one configuration, for a PRACH transmission over a regular UL subframe, an LBT technique can be utilized that follows an LBT technique for regular PUSCH transmissions. Specifically, when the PRACH transmission is within the TxOP, a single-shot LBT can be performed, or no LBT can be performed when the gap between the PRACH transmission and an end of a preceding DL transmission is within 16us). When the PRACH transmission is outside the TxOP, Category 4 (Cat-4) LBT can be performed. Alternatively, a single-shot LBT can be performed regardless of whether the PRACH transmission is within or outside the TxOP.

With respect to the PRACH design options described above, either a subset or all of the PRACH design options can be supported in eLAA systems.

In one configuration, a PRACH design is provided for eLAA, and the PRACH design can improve a timing estimation accuracy. The PRACH design can include a design of a PRACH waveform, format, and resource allocation, as well as a technique for LBT. In one example, the PRACH waveform can have a continuous RB allocation with an occupied bandwidth of at least 2 MHz (e.g., 12 continuous PRBs). In another example, similar to the PRACH design in legacy LTE (e.g., PRACH preamble format 0/4), a subcarrier spacing can be reduced to the same as legacy PRACH, e.g., 7.5 kHz for PRACH format 4 and 1.25 kHz for PRACH format 0. In yet another example, the PRACH subcarrier spacing can be doubled from the legacy PRACH, e.g., 15 kHz from PRACH format 4 and 2.5 kHz from PRACH format 0. In a further example, a PRACH transmission unit can include one cyclic prefix (CP), repeated PRACH preamble symbols and one guard time (GT), where a CP duration and a GT duration can be the same as the legacy PRACH. In yet a further example, the number of repeated preambles can be set to fit into one UL subframe or two UL subframes in order to compensate for the power back off utilized to meet the PSD regulation.

In one example, a PRACH transmission unit can include one CP, one PRACH preamble and one GT when the subcarrier spacing is the same as legacy PRACH, or the PRACH transmission unit can include one CP, two PRACH preambles and one GT when the subcarrier spacing is doubled from the legacy PRACH. In another example, the number of repeated PRACH transmission units (including the CP, preamble and GT) can be set to fit into one UL subframe or two UL subframes in order to compensate for the power back off utilized to meet the PSD regulation. In yet another example, a CP duration can depend on a maximal delay spread and a maximal round trip delay, and the number of preamble repetition can depend on the coverage area. In a further example, the CP duration can be predefined, or configured via RRC signaling. In yet a further example, the PRACH transmission can be allocated to different sets of frequency resources (i.e., frequency hopping) over different repetitions in the time domain, which can achieve frequency diversity. In an additional example, the PRACH can be repeated in the frequency domain to compensate for power back off due to the PSD regulation.

In one example, the PRACH may not support frequency multiplexing with other interlaced transmissions. In another example, the PRACH can be frequency multiplexed with other interlaced transmissions, and REs within the interlaced transmission that are overlapped with PRACH resources can be reserved (i.e., UEs scheduled with the interlaced transmission are not to transmit over these REs). In yet another example, a guard band may not be utilized to reduce ICI, where a number of guard subcarriers can depend on a cell size, as well as operation preferences with respect to the tradeoff of performance loss due to overhead caused by the guard band, e.g., 15 kHz at one end of the RB and 22.5 kHz at the other end of the RB can be left blank, which is the same as legacy PRACH format 4.

In one example, the PRACH preamble sequence can be based on the sequence designed in the legacy LTE, where the sequence can be repeated or truncated to fit into a number of REs that are allocated for the PRACH transmission, e.g., the sequence after repeating can have a length of (24*N-N_guard) for 7.5kHz subcarrier spacing and (12*N-N_guard) for 15kHz subcarrier spacing, where N_guard is the number of guard subcarriers (e.g., N_guard = 5 for 7.5 kHz subcarrier spacing), and N is the number of allocated continuous PRBs. In another example, when the PRACH uses a subcarrier spacing of 15 kHz, the legacy PRACH format 4 can be used without modification. In this case, 30 and 45 kHz are left blank at the two ends of the allocated RBs, respectively. In yet another example, a new sequence with desirable length can be designed. In a further example, for a PRACH with subcarrier spacing of 7.5 kHz and continuous RB allocation, a set of ZC sequences with a length being a largest prime number that is smaller than 24*N can be defined, where N is the number of continuous RBs allocated to the PRACH (e.g., N = 12). For example, when N=12, the PRACH sequence can be one belonging to the set of ZC sequences with a length of 283, and 15kHz and 22.5 kHz can be left blank at the two ends of the allocated resources, respectively.

In one example, a PDCCH order can be used to indicate the PRACH preamble sequence for a contention-free PRACH process. In another example, the PDCCH order can be extended to explicitly or implicitly indicate when to transmit the PRACH, or the PDCCH order can be semi-statically configured via RRC signaling. In yet another example, for implicit indication of the PDCCH order, a fixed timing relationship between a reception of the PDCCH order and a transmission of the PRACH can be predefined (e.g., 4 ms between the PDCCH order and PRACH transmission, or 6 ms between the PDCCH order and PRACH transmission, which is the legacy LTE minimal timing gap). Alternatively, the timing resource can be semi-statically configured via RRC signaling. In a further example, the frequency resources for the PRACH transmission can be semi-statically configured via RRC signaling, or dynamically indicated via the PDCCH order for the contention-free PRACH process.

In one example, UEs can be multiplexed in the frequency domain via a cyclic shift (CS) and/or OCC. In another example, for a PRACH transmission over a regular UL subframe, an LBT technique can be utilized that follows an LBT technique for regular PUSCH transmissions. Specifically, when the PRACH transmission is within the TxOP, a single-shot LBT can be performed, or no LBT can be performed when the gap between the PRACH transmission and an end of a preceding DL transmission is within 16us). When the PRACH transmission is outside the TxOP, Category 4 (Cat-4) LBT can be performed.

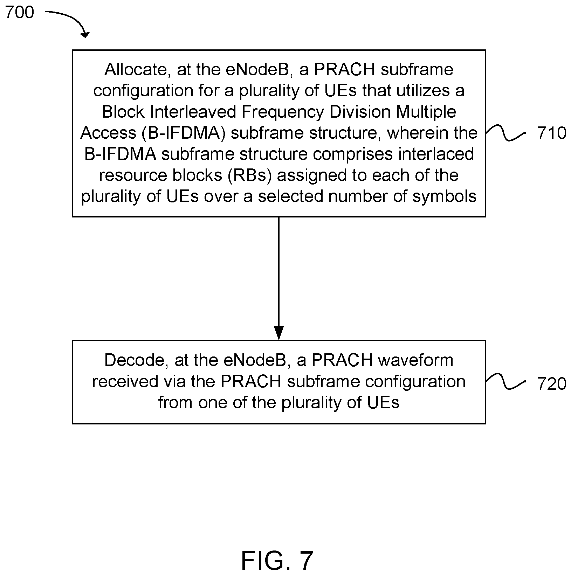

Another example provides functionality 700 of an eNodeB operable to configure a physical random access channel (PRACH) to enable uplink communications by a user equipment (UE), as shown in FIG 7. The eNodeB can comprise one or more processors and memory configured to: allocate, at the eNodeB, a PRACH subframe configuration for a plurality of UEs that utilizes a Block Interleaved Frequency Division Multiple Access (B-IFDMA) subframe structure, wherein the B-IFDMA subframe structure comprises interlaced resource blocks (RBs) assigned to each of the plurality of UEs over a selected number of symbols, as in block 710. The eNodeB can comprise one or more processors and memory configured to: decode, at the eNodeB, a PRACH waveform received from one of the plurality of UEs, wherein the UE is configured to transmit the PRACH waveform using the PRACH subframe configuration, as in block 720.

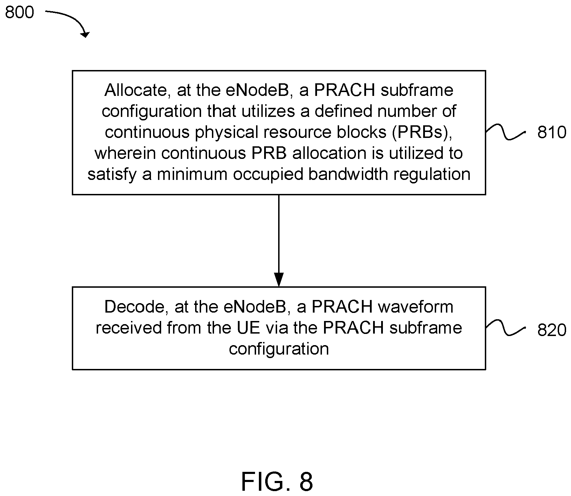

Another example provides functionality 800 of an eNodeB operable to configure a physical random access channel (PRACH) for a user equipment (UE), as shown in FIG 8. The eNodeB can comprise one or more processors and memory configured to: allocate, at the eNodeB, a PRACH subframe configuration that utilizes a defined number of continuous physical resource blocks (PRBs), wherein continuous PRB allocation is utilized to satisfy a minimum occupied bandwidth regulation, as in block 810. The eNodeB can comprise one or more processors and memory configured to: decode, at the eNodeB, a PRACH waveform received from the UE, wherein the UE is configured to transmit the PRACH waveform using the PRACH subframe configuration, as in block 820.

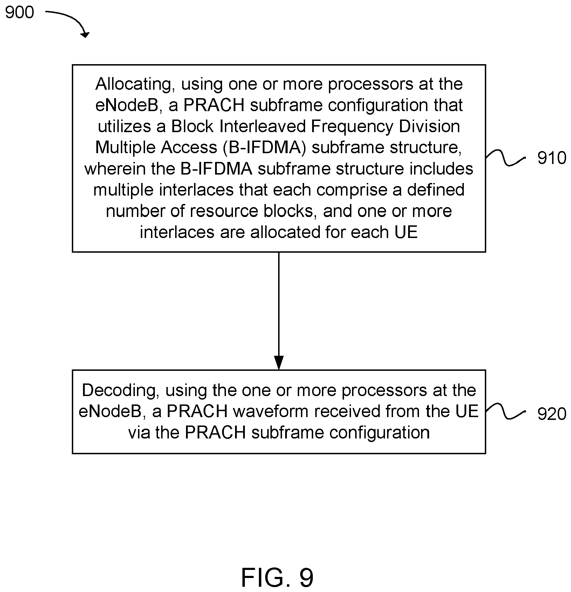

Another example provides at least one machine readable storage medium having instructions 900 embodied thereon for configuring a physical random access channel (PRACH) for a user equipment (UE), as shown in FIG 9. The instructions can be executed on a machine, where the instructions are included on at least one computer readable medium or one non-transitory machine readable storage medium. The instructions when executed perform: allocating, using one or more processors at an eNodeB, a PRACH subframe configuration that utilizes a Block Interleaved Frequency Division Multiple Access (B-IFDMA) subframe structure, wherein the B-IFDMA subframe structure includes multiple interlaces that each comprise a defined number of resource blocks, and one or more interlaces are allocated for each UE, as in block 910. The instructions when executed perform: decoding, using the one or more processors at the eNodeB, a PRACH waveform received from the UE, wherein the UE is configured to transmit the PRACH waveform using the PRACH subframe configuration, as in block 920.

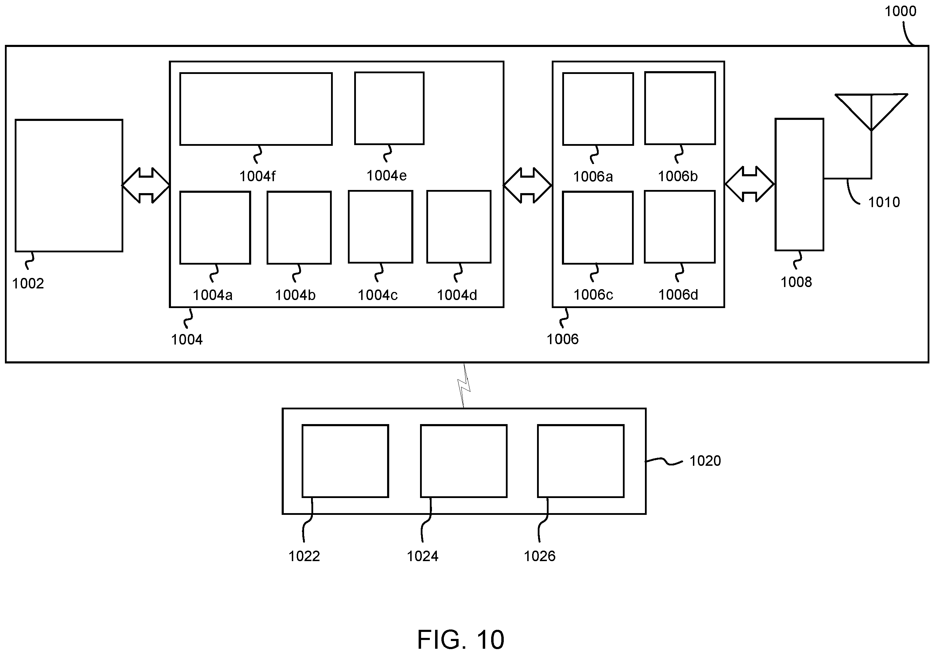

FIG. 10 provides an example illustration of a user equipment (UE) device 1000 and a node 1020. The UE device 1000 can include a wireless device, a mobile station (MS), a mobile wireless device, a mobile communication device, a tablet, a handset, or other type of wireless device. The UE device 1000 can include one or more antennas configured to communicate with the node 1020 or transmission station, such as a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The node 1020 can include one or more processors 1022, memory 1024 and a transceiver 1026. The UE device 1000 can be configured to communicate using at least one wireless communication standard including 3GPP LTE, WiMAX, High Speed Packet Access (HSPA), Bluetooth, and WiFi. The UE device 1000 can communicate using separate antennas for each wireless communication standard or shared antennas for multiple wireless communication standards. The UE device 1000 can communicate in a wireless local area network (WLAN), a wireless personal area network (WPAN), and/or a WWAN.

In some embodiments, the UE device 1000 may include application circuitry 1002, baseband circuitry 1004, Radio Frequency (RF) circuitry 1006, front-end module (FEM) circuitry 1008 and one or more antennas 1010, coupled together at least as shown. In addition, the node 1020 may include, similar to that described for the UE device 1000, application circuitry, baseband circuitry, Radio Frequency (RF) circuitry, front-end module (FEM) circuitry and one or more antennas

The application circuitry 1002 may include one or more application processors. For example, the application circuitry 1002 may include circuitry such as, but not limited to, one or more single-core or multi-core processors. The processor(s) may include any combination of general-purpose processors and dedicated processors (e.g., graphics processors, application processors, etc.). The processors may be coupled with and/or may include a storage medium, and may be configured to execute instructions stored in the storage medium to enable various applications and/or operating systems to run on the system.

The baseband circuitry 1004 may include circuitry such as, but not limited to, one or more single-core or multi-core processors. The baseband circuitry 1004 may include one or more baseband processors and/or control logic to process baseband signals received from a receive signal path of the RF circuitry 1006 and to generate baseband signals for a transmit signal path of the RF circuitry 1006. Baseband processing circuity 1004 may interface with the application circuitry 1002 for generation and processing of the baseband signals and for controlling operations of the RF circuitry 1006. For example, in some embodiments, the baseband circuitry 1004 may include a second generation (2G) baseband processor 1004a, third generation (3G) baseband processor 1004b, fourth generation (4G) baseband processor 1004c, and/or other baseband processor(s) 1004d for other existing generations, generations in development or to be developed in the future (e.g., fifth generation (5G), 6G, etc.). The baseband circuitry 1004 (e.g., one or more of baseband processors 1004a-d) may handle various radio control functions that enable communication with one or more radio networks via the RF circuitry 1006. The radio control functions may include, but are not limited to, signal modulation/demodulation, encoding/decoding, radio frequency shifting, etc. In some embodiments, modulation/demodulation circuitry of the baseband circuitry 1004 may include Fast-Fourier Transform (FFT), precoding, and/or constellation mapping/demapping functionality. In some embodiments, encoding/decoding circuitry of the baseband circuitry 1004 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1004 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1004e of the baseband circuitry 1004 may be configured to run elements of the protocol stack for signaling of the PHY, MAC, RLC, PDCP and/or RRC layers. In some embodiments, the baseband circuitry may include one or more audio digital signal processor(s) (DSP) 1004f. The audio DSP(s) 104f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1004 and the application circuitry 1002 may be implemented together such as, for example, on a system on a chip (SOC).

In some embodiments, the baseband circuitry 1004 may provide for communication compatible with one or more radio technologies. For example, in some embodiments, the baseband circuitry 1004 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1004 is configured to support radio communications of more than one wireless protocol may be referred to as multi-mode baseband circuitry.

The RF circuitry 1006 may enable communication with wireless networks using modulated electromagnetic radiation through a non-solid medium. In various embodiments, the RF circuitry 1006 may include switches, filters, amplifiers, etc. to facilitate the communication with the wireless network. RF circuitry 1006 may include a receive signal path which may include circuitry to down-convert RF signals received from the FEM circuitry 1008 and provide baseband signals to the baseband circuitry 1004. RF circuitry 1006 may also include a transmit signal path which may include circuitry to up-convert baseband signals provided by the baseband circuitry 1004 and provide RF output signals to the FEM circuitry 1008 for transmission.

In some embodiments, the RF circuitry 1006 may include a receive signal path and a transmit signal path. The receive signal path of the RF circuitry 1006 may include mixer circuitry 1006a, amplifier circuitry 1006b and filter circuitry 1006c. The transmit signal path of the RF circuitry 1006 may include filter circuitry 1006c and mixer circuitry 1006a. RF circuitry 1006 may also include synthesizer circuitry 1006d for synthesizing a frequency for use by the mixer circuitry 1006a of the receive signal path and the transmit signal path. In some embodiments, the mixer circuitry 1006a of the receive signal path may be configured to down-convert RF signals received from the FEM circuitry 1008 based on the synthesized frequency provided by synthesizer circuitry 1006d. The amplifier circuitry 1006b may be configured to amplify the down-converted signals and the filter circuitry 1006c may be a low-pass filter (LPF) or band-pass filter (BPF) configured to remove unwanted signals from the down-converted signals to generate output baseband signals. Output baseband signals may be provided to the baseband circuitry 1004 for further processing. In some embodiments, the output baseband signals may be zero-frequency baseband signals, although this is not a necessity. In some embodiments, mixer circuitry 1006a of the receive signal path may comprise passive mixers, although the scope of the embodiments is not limited in this respect.

In some embodiments, the mixer circuitry 1006a of the transmit signal path may be configured to up-convert input baseband signals based on the synthesized frequency provided by the synthesizer circuitry 1006d to generate RF output signals for the FEM circuitry 1008. The baseband signals may be provided by the baseband circuitry 1004 and may be filtered by filter circuitry 1006c. The filter circuitry 1006c may include a low-pass filter (LPF), although the scope of the embodiments is not limited in this respect.

In some embodiments, the mixer circuitry 1006a of the receive signal path and the mixer circuitry 1006a of the transmit signal path may include two or more mixers and may be arranged for quadrature down-conversion and/or up-conversion respectively. In some embodiments, the mixer circuitry 1006a of the receive signal path and the mixer circuitry 1006a of the transmit signal path may include two or more mixers and may be arranged for image rejection (e.g., Hartley image rejection). In some embodiments, the mixer circuitry 1006a of the receive signal path and the mixer circuitry 1006a may be arranged for direct down-conversion and/or direct up-conversion, respectively. In some embodiments, the mixer circuitry 1006a of the receive signal path and the mixer circuitry 1006a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1006 may include analog-to-digital converter (ADC) and digital-to-analog converter (DAC) circuitry and the baseband circuitry 1004 may include a digital baseband interface to communicate with the RF circuitry 1006.

In some dual-mode embodiments, a separate radio IC circuitry may be provided for processing signals for each spectrum, although the scope of the embodiments is not limited in this respect.

In some embodiments, the synthesizer circuitry 1006d may be a fractional-N synthesizer or a fractional N/N+1 synthesizer, although the scope of the embodiments is not limited in this respect as other types of frequency synthesizers may be suitable. For example, synthesizer circuitry 1006d may be a delta-sigma synthesizer, a frequency multiplier, or a synthesizer comprising a phase-locked loop with a frequency divider.

The synthesizer circuitry 1006d may be configured to synthesize an output frequency for use by the mixer circuitry 1006a of the RF circuitry 1006 based on a frequency input and a divider control input. In some embodiments, the synthesizer circuitry 1006d may be a fractional N/N+1 synthesizer.

In some embodiments, frequency input may be provided by a voltage controlled oscillator (VCO), although that is not a necessity. Divider control input may be provided by either the baseband circuitry 1004 or the applications processor 1002 depending on the desired output frequency. In some embodiments, a divider control input (e.g., N) may be determined from a look-up table based on a channel indicated by the applications processor 1002.

Synthesizer circuitry 1006d of the RF circuitry 1006 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1006d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1006 may include an IQ/polar converter.

FEM circuitry 1008 may include a receive signal path which may include circuitry configured to operate on RF signals received from one or more antennas 1010, amplify the received signals and provide the amplified versions of the received signals to the RF circuitry 1006 for further processing. FEM circuitry 1008 may also include a transmit signal path which may include circuitry configured to amplify signals for transmission provided by the RF circuitry 1006 for transmission by one or more of the one or more antennas 1010.

In some embodiments, the FEM circuitry 1008 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1006). The transmit signal path of the FEM circuitry 1008 may include a power amplifier (PA) to amplify input RF signals (e.g., provided by RF circuitry 1006), and one or more filters to generate RF signals for subsequent transmission (e.g., by one or more of the one or more antennas 1010.

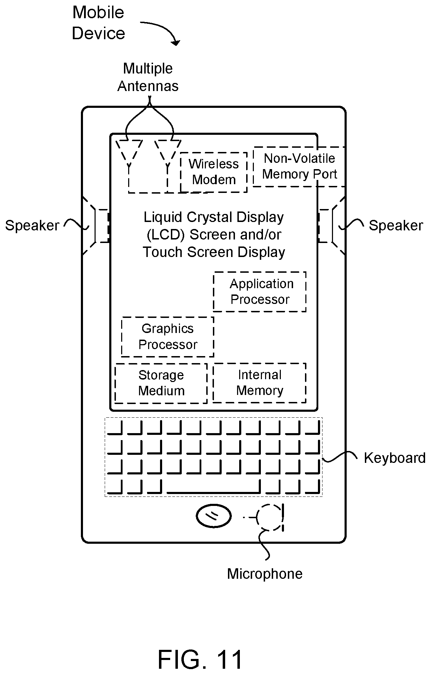

FIG. 11 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG. 11 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

### Examples

The following examples pertain to specific technology embodiments and point out specific features, elements, or actions that can be used or otherwise combined in achieving such embodiments.
Example 1 includes an apparatus of an eNodeB operable to configure a physical random access channel (PRACH) to enable uplink communications by a user equipment (UE), the apparatus comprising one or more processors and memory configured to: allocate, at the eNodeB, a PRACH subframe configuration for a plurality of UEs that utilizes a Block Interleaved Frequency Division Multiple Access (B-IFDMA) subframe structure, wherein the B-IFDMA subframe structure comprises interlaced resource blocks (RBs) assigned to each of the plurality of UEs over a selected number of symbols; and decode, at the eNodeB, a PRACH waveform received via the PRACH subframe configuration from one of the plurality of UEs.
Example 2 includes the apparatus of Example 1, wherein the PRACH subframe configuration is utilized by UEs that operate in an enhanced Licensed-Assisted Access (LAA) system, or in a standalone system that operates in an unlicensed spectrum without utilizing an anchor in a licensed spectrum
Example 3 includes the apparatus of any of Examples 1 to 2, wherein the PRACH waveform received from the UE is based on a PRACH preamble in format 0 or format 4, wherein the PRACH waveform is transmitted to the UE via an uplink subframe, wherein the PRACH preamble in format 4 is repeated in a time domain when transmitted using the uplink subframe.
Example 4 includes the apparatus of any of Examples 1 to 3, wherein: the PRACH subframe configuration utilizes a guard band when the PRACH waveform is frequency multiplexed with transmissions using a subcarrier spacing that is different than that of the PRACH waveform, wherein the guard band is inserted within each interlace of RBs to reduce interference to and from transmissions in surrounding interlaces, wherein the guard band includes a defined number of subcarriers depending on a cell size; or the PRACH subframe configuration does not utilize a guard band when multiple interlaces of RBs are used to transmit PRACH waveforms in a special subframe with a same subcarrier spacing.
Example 5 includes the apparatus of any of Examples 1 to 4, wherein: the PRACH subframe configuration includes symbols (k) and (k+1), wherein k ∈ {0, 2, 4, 6, 8, 10, 12} when the PRACH waveform is transmitted using a full uplink subframe and k ∈ {0, 2} or k=0 when the PRACH waveform is transmitted using a special subframe, and a subcarrier spacing is equal to 15 kilohertz (KHz); and symbol (k) includes a cyclic prefix (CP) and symbol (k+1) is a cyclic shifted version of symbol (k) in a time domain; or symbol (k) includes a cyclic prefix (CP) and symbol (k+1) is a repetition of symbol (k) without the CP, wherein the symbol (k) that includes the CP is utilized to reduce inter-interlace interference; or symbol (k) includes a first PRACH waveform and subsequent symbols in a subframe includes a second PRACH waveform that is a repetition of the first PRACH waveform, wherein the first and second PRACH waveforms include PRACH preambles, wherein the first and second PRACH waveforms follow a CP duration, wherein the CP duration is dependent on a maximal delay spread and a maximal round trip delay, wherein the CP duration is predefined or configured via radio resource control (RRC) signaling.
Example 6 includes the apparatus of any of Examples 1 to 5, wherein the PRACH waveform includes a PRACH preamble sequence that is repeated or truncated to fit into a number of allocated resource elements in the frequency domain, wherein the PRACH preamble sequence is indicated using a physical downlink control channel (PDCCH) order for a contention-free PRACH , or the PRACH preamble sequence is indicated via a timing and frequency resource indication that is semi-statically configured via radio resource control (RRC) signaling; or the PRACH preamble sequence is configured via RRC signaling for a contention-based PRACH.
Example 7 includes the apparatus of any of Examples 1 to 6, wherein the PRACH waveform is transmitted using an Uplink Pilot Time Slot (UpPTS) region of a special subframe, and the UpPTS includes four symbols for transmission of the PRACH waveform.
Example 8 includes the apparatus of any of Examples 1 to 7, wherein: a single-shot listen-before-talk (LBT) is performed when the PRACH waveform is transmitted using a special subframe; or LBT is not performed when a gap between the PRACH waveform and an end of a preceding downlink transmission is within a defined time duration; or a single-shot LBT is performed when the PRACH waveform is within or outside a transmit opportunity (TxOP), and the PRACH waveform is transmitted on a full uplink subframe.
Example 9 includes the apparatus of any of Examples 1 to 8, wherein the B-IFDMA subframe structure utilizes a randomized interlace structure to reduce ambiguities in a timing estimation, wherein resource blocks for each interlace are configured for one or more UEs using a non-equidistance resource block pattern.
Example 10 includes an apparatus of an eNodeB operable to configure a physical random access channel (PRACH) for a user equipment (UE), the apparatus comprising one or more processors and memory configured to: allocate, at the eNodeB, a PRACH subframe configuration that utilizes a defined number of continuous physical resource blocks (PRBs), wherein continuous PRB allocation is utilized to satisfy a minimum occupied bandwidth regulation; and decode, at the eNodeB, a PRACH waveform received from the UE via the PRACH subframe configuration.
Example 11 includes the apparatus of Example 10, wherein the PRACH subframe configuration is utilized by UEs that operate in an enhanced Licensed-Assisted Access (LAA) system.
Example 12 includes the apparatus of any of Examples 10 to 11, wherein the PRACH waveform received from the UE is a PRACH preamble in format 0 or format 4, wherein a subcarrier spacing for the PRACH preamble in format 0 is 1.25 kilohertz (kHz) or 2.5 kHz, and a subcarrier spacing for the PRACH preamble in format 4 is 7.5 kHz or 15 kHz.
Example 13 includes the apparatus of any of Examples 10 to 12, wherein the PRACH subframe configuration with the continuous PRB allocation includes a plurality of symbols utilized for the transmission of PRACH waveforms, wherein the PRACH waveforms include PRACH preambles; and each symbol in the PRACH subframe configuration includes a repetition of a PRACH preamble in a time domain, and the symbols follow a cyclic prefix (CP) duration; or a CP duration is followed by a set of symbols carrying repetitions of PRACH preambles in the time domain, wherein the CP duration is dependent on a maximal delay spread and a maximal round trip delay, and the CP duration is predefined or configured via radio resource control (RRC) signaling.
Example 14 includes the apparatus of any of Examples 10 to 13, wherein: the defined number of continuous PRBs is repeated in a frequency domain to achieve power backoff; or the PRACH waveform is repeated a defined number of times in a time domain to fit into an uplink subframe.
Example 15 includes the apparatus of any of Examples 10 to 14, wherein the PRACH subframe configuration utilizes a guard band when the PRACH waveform is frequency multiplexed with additional transmissions which have different subcarrier spacing, wherein the additional transmissions include physical uplink shared channel (PUSCH) or physical uplink control channel (PUCCH) transmissions, wherein the guard band includes a defined number of subcarriers depending on a cell size.
Example 16 includes the apparatus of any of Examples 10 to 15, wherein the PRACH waveform includes a PRACH preamble sequence that is repeated or truncated to fit into a number of allocated resource elements, wherein the PRACH preamble sequence is indicated using a physical downlink control channel (PDCCH) order for a contention-free PRACH.
Example 17 includes the apparatus of any of Examples 10 to 16, wherein the PRACH subframe configuration enables UEs to be multiplexed in a frequency domain via cyclic shifts or orthogonal cover codes.
Example 18 includes the apparatus of any of Examples 10 to 17, wherein LBT is not performed when the PRACH waveform is within a defined transmission opportunity (TxOP) and a gap between the PRACH waveform and an end of a preceding downlink transmission is within a defined time duration.
Example 19 includes at least one machine readable storage medium having instructions embodied thereon for configuring a physical random access channel (PRACH) for a user equipment (UE), the instructions when executed perform the following: allocating, using one or more processors at an eNodeB, a PRACH subframe configuration that utilizes a Block Interleaved Frequency Division Multiple Access (B-IFDMA) subframe structure, wherein the B-IFDMA subframe structure includes multiple interlaces that each comprise a defined number of resource blocks, and one or more interlaces are allocated for each UE; and decoding, using the one or more processors at the eNodeB, a PRACH waveform received from the UE via the PRACH subframe configuration.
Example 20 includes the at least one machine readable storage medium of Example 19, wherein the PRACH subframe configuration is utilized by UEs that operate in an enhanced Licensed-Assisted Access (LAA) system, or in a standalone system that operates in an unlicensed spectrum without utilizing an anchor in a licensed spectrum.
Example 21 includes the at least one machine readable storage medium of any of Examples 19-20, wherein: the PRACH subframe configuration utilizes a guard band when the PRACH waveform is frequency multiplexed with transmissions using a subcarrier spacing that is different than that of the PRACH waveform, wherein the guard band is inserted within each interlace to reduce interference to and from transmissions in surrounding interlaces, wherein the guard band includes a defined number of subcarriers depending on a cell size; or the PRACH subframe configuration does not utilize a guard band when the multiple interlaces are used to transmit PRACH waveforms in a special subframe with a same subcarrier spacing.
Example 22 includes the at least one machine readable storage medium of any of Examples 19-21, wherein: the PRACH subframe configuration includes symbols (k) and (k+1), wherein k ∈ {0, 2, 4, 6, 8, 10, 12} when the PRACH waveform is transmitted using an uplink subframe and k ∈ {0, 2} or k=0 when the PRACH waveform is transmitted using a special subframe; and symbol (k) includes a cyclic prefix (CP) and symbol (k+1) is a cyclic shifted version of symbol (k) in a time domain; or symbol (k) includes a cyclic prefix (CP) and symbol (k+1) is a repetition of symbol (k) without the CP, wherein the symbol (k) that includes the CP is utilized to reduce inter-interlace interference; or symbol (k) includes a first PRACH waveform and subsequent symbols in a subframe includes a second PRACH waveform that is a repetition of the first PRACH waveform, wherein the first and second PRACH waveforms include PRACH preambles, wherein the first and second PRACH waveforms follow a CP duration, wherein the CP duration is dependent on a maximal delay spread and a maximal round trip delay, wherein the CP duration is predefined or configured via radio resource control (RRC) signaling.
Example 23 includes an eNodeB operable to configure a physical random access channel (PRACH) for a user equipment (UE), the eNodeB comprising: means for allocating a PRACH subframe configuration that utilizes a Block Interleaved Frequency Division Multiple Access (B-IFDMA) subframe structure, wherein the B-IFDMA subframe structure includes multiple interlaces that each comprise a defined number of resource blocks, and one or more interlaces are allocated for each UE; and means for decoding a PRACH waveform received from the UE via the PRACH subframe configuration.
Example 24 includes the eNodeB of Example 23, wherein the PRACH subframe configuration is utilized by UEs that operate in an enhanced Licensed-Assisted Access (LAA) system, or in a standalone system that operates in an unlicensed spectrum without utilizing an anchor in a licensed spectrum
Example 25 includes the eNodeB of any of Examples 23 to 24, wherein: the PRACH subframe configuration utilizes a guard band when the PRACH waveform is frequency multiplexed with transmissions using a subcarrier spacing that is different than that of the PRACH waveform, wherein the guard band is inserted within each interlace to reduce interference to and from transmissions in surrounding interlaces, wherein the guard band includes a defined number of subcarriers depending on a cell size; or the PRACH subframe configuration does not utilize a guard band when the multiple interlaces are used to transmit PRACH waveforms in a special subframe with a same subcarrier spacing.
Example 26 includes the eNodeB of any of Examples 23 to 25, wherein: the PRACH subframe configuration includes symbols (k) and (k+1), wherein k ∈ {0, 2, 4, 6, 8, 10, 12} when the PRACH waveform is transmitted using an uplink subframe and k ∈ {0, 2} or k=0 when the PRACH waveform is transmitted using a special subframe; and symbol (k) includes a cyclic prefix (CP) and symbol (k+1) is a cyclic shifted version of symbol (k) in a time domain; or symbol (k) includes a cyclic prefix (CP) and symbol (k+1) is a repetition of symbol (k) without the CP, wherein the symbol (k) that includes the CP is utilized to reduce inter-interlace interference; or symbol (k) includes a first PRACH waveform and subsequent symbols in a subframe includes a second PRACH waveform that is a repetition of the first PRACH waveform, wherein the first and second PRACH waveforms include PRACH preambles, wherein the first and second PRACH waveforms follow a CP duration, wherein the CP duration is dependent on a maximal delay spread and a maximal round trip delay, wherein the CP duration is predefined or configured via radio resource control (RRC) signaling.

Various techniques, or certain aspects or portions thereof, may take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). In one example, selected components of the transceiver module can be located in a cloud radio access network (C-RAN). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology may be referred to herein along with alternatives for the various components thereof. It is understood that such embodiments, examples, and alternatives are not to be construed as defacto equivalents of one another, but are to be considered as separate and autonomous representations of the present technology.

Furthermore, the described features, structures, or characteristics may be combined in any suitable manner in one or more embodiments. In the following description, numerous specific details are provided, such as examples of layouts, distances, network examples, etc., to provide a thorough understanding of embodiments of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology.

While the forgoing examples are illustrative of the principles of the present technology in one or more particular applications, it will be apparent to those of ordinary skill in the art that numerous modifications in form, usage and details of implementation can be made without the exercise of inventive faculty, and without departing from the scope of the claims set forth below.

## Claims

1. An apparatus of an eNodeB (1020) operable to configure a physical random access channel, PRACH, to enable uplink communications by a user equipment, UE (1000), the apparatus comprising one or more processors and memory configured to:
allocate, at the eNodeB (1020), a PRACH subframe configuration for a plurality of UEs that utilizes a Block Interleaved Frequency Division Multiple Access, B-IFDMA, subframe structure, wherein the B-IFDMA subframe structure comprises interlaced resource blocks, RBs, assigned to each of the plurality of UEs over a selected number of symbols; and
decode, at the eNodeB, a PRACH waveform received via the PRACH subframe configuration from one of the plurality of UEs;
**characterised in that** the B-IFDMA subframe structure utilizes a randomized interlace structure to reduce ambiguities in a timing estimation, wherein resource blocks for each interlace are configured for one or more UEs (1000) using a non-equidistance resource block pattern.

2. The apparatus of claim 1, wherein:
the PRACH subframe configuration is utilized by UEs (1000) that operate in an enhanced Licensed-Assisted Access, LAA, system, or in a standalone system that operates in an unlicensed spectrum without utilizing an anchor in a licensed spectrum; or
the PRACH waveform received from the UE (1000) is based on a PRACH preamble in format 0 or format 4, wherein the PRACH waveform is transmitted to the UE via an uplink subframe, wherein the PRACH preamble in format 4 is repeated in a time domain when transmitted using the uplink subframe.

3. The apparatus of any of claims 1 to 2, wherein:
the PRACH subframe configuration utilizes a guard band when the PRACH waveform is frequency multiplexed with transmissions using a subcarrier spacing that is different than that of the PRACH waveform, wherein the guard band is inserted within each interlace of RBs to reduce interference to and from transmissions in surrounding interlaces, wherein the guard band includes a defined number of subcarriers depending on a cell size; or
the PRACH subframe configuration does not utilize a guard band when multiple interlaces of RBs are used to transmit PRACH waveforms in a special subframe with a same subcarrier spacing.

4. The apparatus of any of claims 1 to 3, wherein:
the PRACH subframe configuration includes symbols (k) and (k+1), wherein k∈{0, 2, 4, 6, 8, 10, 12} when the PRACH waveform is transmitted using a full uplink subframe and k∈{0, 2} or k=0 when the PRACH waveform is transmitted using a special subframe, and a subcarrier spacing is equal to 15 kilohertz (KHz); and
symbol (k) includes a cyclic prefix, CP, and symbol (k+1) is a cyclic shifted version of symbol (k) in a time domain; or
symbol (k) includes a cyclic prefix, CP, and symbol (k+1) is a repetition of symbol (k) without the CP, wherein the symbol (k) that includes the CP is utilized to reduce inter-interlace interference; or
symbol (k) includes a first PRACH waveform and subsequent symbols in a subframe includes a second PRACH waveform that is a repetition of the first PRACH waveform, wherein the first and second PRACH waveforms include PRACH preambles, wherein the first and second PRACH waveforms follow a CP duration, wherein the CP duration is dependent on a maximal delay spread and a maximal round trip delay, wherein the CP duration is predefined or configured via radio resource control, RRC, signaling.

5. The apparatus of any of claims 1 to 4, wherein:
the PRACH waveform includes a PRACH preamble sequence that is repeated or truncated to fit into a number of allocated resource elements in the frequency domain, wherein the PRACH preamble sequence is indicated using a physical downlink control channel, PDCCH, order for a contention-free PRACH, or the PRACH preamble sequence is indicated via a timing and frequency resource indication that is semi-statically configured via radio resource control, RRC, signaling; or
the PRACH preamble sequence is configured via RRC signaling for a contention-based PRACH.

6. The apparatus of any of claims 1 to 5, wherein:
the PRACH waveform is transmitted using an Uplink Pilot Time Slot, UpPTS, region of a special subframe, and the UpPTS includes four symbols for transmission of the PRACH waveform;.

7. The apparatus of any of claims 1 to 6, wherein:
a single-shot listen-before-talk, LBT, is performed when the PRACH waveform is transmitted using a special subframe; or
LBT is not performed when a gap between the PRACH waveform and an end of a preceding downlink transmission is within a defined time duration; or
a single-shot LBT is performed when the PRACH waveform is within or outside a transmit opportunity, TxOP, and the PRACH waveform is transmitted on a full uplink subframe.

8. At least one machine readable storage medium having instructions embodied thereon for configuring a physical random access channel, PRACH, for a user equipment, UE (1000), the instructions when executed by one or more processors at an eNodeB (1020) perform the following:
allocating, using one or more processors at the eNodeB (1020), a PRACH subframe configuration that utilizes a Block Interleaved Frequency Division Multiple Access, B-IFDMA, subframe structure, wherein the B-IFDMA subframe structure includes multiple interlaces that each comprise a defined number of resource blocks, and one or more interlaces are allocated for each UE (1000); and
decoding, using the one or more processors at the eNodeB (1020), a PRACH waveform received from the UE via the PRACH subframe configuration,
**characterised in that** the B-IFDMA subframe structure utilizes a randomized interlace structure to reduce ambiguities in a timing estimation, wherein resource blocks for each interlace are configured for one or more UEs (1000) using a non-equidistance resource block pattern.

9. The at least one machine readable storage medium of claim 8, wherein the PRACH subframe configuration is utilized by UEs (1000) that operate in an enhanced Licensed-Assisted Access, LAA, system, or in a standalone system that operates in an unlicensed spectrum without utilizing an anchor in a licensed spectrum.

10. The at least one machine readable storage medium of any of claims 8 to 9, wherein:
the PRACH subframe configuration utilizes a guard band when the PRACH waveform is frequency multiplexed with transmissions using a subcarrier spacing that is different than that of the PRACH waveform, wherein the guard band is inserted within each interlace to reduce interference to and from transmissions in surrounding interlaces, wherein the guard band includes a defined number of subcarriers depending on a cell size; or
the PRACH subframe configuration does not utilize a guard band when the multiple interlaces are used to transmit PRACH waveforms in a special subframe with a same subcarrier spacing.

11. The at least one machine readable storage medium of any of claims 8 to 10, wherein:
the PRACH subframe configuration includes symbols (k) and (k+1), wherein k∈{0, 2, 4, 6, 8, 10, 12} when the PRACH waveform is transmitted using an uplink subframe and k∈{0, 2} or k=0 when the PRACH waveform is transmitted using a special subframe; and
symbol (k) includes a cyclic prefix, CP, and symbol (k+1) is a cyclic shifted version of symbol (k) in a time domain; or
symbol (k) includes a cyclic prefix, CP, and symbol (k+1) is a repetition of symbol (k) without the CP, wherein the symbol (k) that includes the CP is utilized to reduce inter-interlace interference; or
symbol (k) includes a first PRACH waveform and subsequent symbols in a subframe includes a second PRACH waveform that is a repetition of the first PRACH waveform, wherein the first and second PRACH waveforms include PRACH preambles, wherein the first and second PRACH waveforms follow a CP duration, wherein the CP duration is dependent on a maximal delay spread and a maximal round trip delay, wherein the CP duration is predefined or configured via radio resource control, RRC, signaling.

## Patentansprüche

1. Vorrichtung eines eNodeB (1020), die zum Konfigurieren eines physikalischen Zufallszugriffskanals, PRACH, betreibbar ist, um Uplink-Kommunikationen durch eine Benutzerausrüstung, UE (1000), zu ermöglichen, wobei die Vorrichtung einen oder mehrere Prozessoren und Speicher umfasst, die konfiguriert sind, um:
am eNodeB (1020) eine PRACH-Unterrahmenkonfiguration für eine Vielzahl von UEs zuzuweisen, die eine Block-Interleaved-Frequency-Division-Multiple-Access-, B-IFDMA-, Unterrahmenstruktur verwendet, wobei die B-IFDMA-Unterrahmenstruktur verschachtelte Ressourcenblöcke, RBs, umfasst, die jedem der Vielzahl von UEs über eine ausgewählte Anzahl von Symbolen zugewiesen sind; und
am eNodeB eine PRACH-Wellenform zu dekodieren, die über die PRACH-Unterrahmenkonfiguration von einer der mehreren UEs empfangen wurde;
**dadurch gekennzeichnet, dass** die B-IFDMA-Unterrahmenstruktur eine zufällige Verschachtelungsstruktur verwendet, um Mehrdeutigkeiten in einer Zeitschätzung zu reduzieren, wobei Ressourcenblöcke für jede Verschachtelung für eine oder mehrere UEs (1000) unter Verwendung eines nicht äquidistanten Ressourcenblockmusters konfiguriert sind.

2. Vorrichtung nach Anspruch 1, wobei:
die PRACH-Unterrahmenkonfiguration von UEs (1000) verwendet wird, die in einem erweiterten Licensed-Assisted-Access-, LAA-, System oder in einem eigenständigen System betrieben werden, das in einem nicht lizenzierten Spektrum betrieben wird, ohne einen Anker in einem lizenzierten Spektrum zu verwenden; oder
die von der UE (1000) empfangene PRACH-Wellenform auf einer PRACH-Präambel im Format 0 oder Format 4 basiert, wobei die PRACH-Wellenform über einen Uplink-Unterrahmen an die UE übertragen wird, wobei die PRACH-Präambel im Format 4 in einem Zeitbereich wiederholt wird, wenn sie unter Verwendung des Uplink-Unterrahmens übertragen wird.

3. Vorrichtung nach einem der Ansprüche 1 bis 2, wobei:
die PRACH-Unterrahmenkonfiguration ein Schutzband verwendet, wenn die PRACH-Wellenform mit Übertragungen unter Verwendung eines Unterträgerabstands, der sich von dem der PRACH-Wellenform unterscheidet, frequenzmultiplexiert wird, wobei das Schutzband in jede Verschachtelung von RBs eingefügt ist, um Interferenzen zu und von Übertragungen in umgebenden Verschachtelungen zu reduzieren, wobei das Schutzband eine definierte Anzahl von Unterträgern in Abhängigkeit von einer Zellengröße beinhaltet; oder
die PRACH-Unterrahmenkonfiguration kein Schutzband verwendet, wenn mehrere Verschachtelungen von RBs verwendet werden, um PRACH-Wellenformen auf einem speziellen Unterrahmen mit demselben Unterträgerabstand zu übertragen.

4. Vorrichtung nach einem der Ansprüche 1 bis 3, wobei:
die PRACH-Unterrahmenkonfiguration Symbole (k) und (k+1) beinhaltet, wobei k∈{0, 2, 4, 6, 8, 10, 12}, wenn die PRACH-Wellenform unter Verwendung eines vollen Uplink-Unterrahmens übertragen wird, und k∈{0, 2} oder k=0, wenn die PRACH-Wellenform unter Verwendung eines speziellen Unterrahmens übertragen wird, und ein Unterträgerabstand gleich 15 Kilohertz (KHz) ist; und Symbol (k) ein zyklisches Präfix, CP, beinhaltet und Symbol (k+1) eine zyklisch verschobene Version von Symbol (k) in einem Zeitbereich ist; oder
Symbol (k) ein zyklisches Präfix, CP, beinhaltet und Symbol (k+1) eine Wiederholung von Symbol (k) ohne das CP ist, wobei das Symbol (k), das CP beinhaltet, verwendet wird, um Inter-Verschachtelungs-Interferenz zu reduzieren; oder
Symbol (k) eine erste PRACH-Wellenform beinhaltet und nachfolgende Symbole in einem Unterrahmen eine zweite PRACH-Wellenform beinhalten, die eine Wiederholung der ersten PRACH-Wellenform ist, wobei die erste und die zweite PRACH-Wellenform PRACH-Präambeln beinhalten, wobei die erste und die zweite PRACH-Wellenform einer CP-Dauer folgen, wobei die CP-Dauer abhängig ist von einer maximalen Verzögerungsspreizung und einer maximalen Umlaufverzögerung, wobei die CP-Dauer vordefiniert ist oder über eine Funkressourcensteuerung-, RRC-, Signalisierung konfiguriert wird.

5. Vorrichtung nach einem der Ansprüche 1 bis 4, wobei:
die PRACH-Wellenform eine PRACH-Präambelsequenz beinhaltet, die wiederholt oder abgeschnitten wird, um in eine Anzahl von zugewiesenen Ressourcenelementen in dem Frequenzbereich zu passen, wobei die PRACH-Präambelsequenz unter Verwendung eines physikalischen Downlink-Steuerkanals, PDCCH, in der Reihenfolge für ein konfliktfreies PRACH angezeigt wird, oder die PRACH-Präambelsequenz über eine Zeitgebungs- und Frequenz-Ressourcenanzeige angezeigt wird, die semi-statisch über Funkressourcensteuerung-, RRC-, Signalisierung konfiguriert wird; oder
die PRACH-Präambelsequenz über RRC-Signalisierung für ein konfliktbasiertes PRACH konfiguriert wird.

6. Vorrichtung nach einem der Ansprüche 1 bis 5, wobei:
die PRACH-Wellenform unter Verwendung einer Uplink-Pilot-Time-Slot-, UpPTS-, Region eines speziellen Unterrahmens übertragen wird und die UpPTS vier Symbole für Übertragung der PRACH-Wellenform beinhaltet;.

7. Vorrichtung nach einem der Ansprüche 1 bis 6, wobei:
ein Single-Shot Listen-Before-Talk, LBT, durchgeführt wird, wenn die PRACH-Wellenform unter Verwendung eines speziellen Unterrahmens übertragen wird; oder LBT nicht durchgeführt wird, wenn eine Lücke zwischen der PRACH-Wellenform und einem Ende einer vorhergehenden Downlink-Übertragung innerhalb einer definierten Zeitdauer liegt; oder
ein Single-Shot-LBT durchgeführt wird, wenn sich die PRACH-Wellenform innerhalb oder außerhalb einer Übertragungsmöglichkeit, TxOP, befindet und die PRACH-Wellenform in einem vollen Uplink-Unterrahmen übertragen wird.

8. Mindestens ein maschinenlesbares Speichermedium mit darauf verkörperten Anweisungen zum Konfigurieren eines physischen Zufallszugriffskanals, PRACH, für eine Benutzerausrüstung, UE (1000), wobei die Anweisungen, wenn sie von einem oder mehreren Prozessoren an einem eNodeB (1020) ausgeführt werden, Folgendes durchführen:
Zuweisen, unter Verwendung eines oder mehrerer Prozessoren an dem eNodeB (1020), einer PRACH-Unterrahmenkonfiguration, die eine Block-Interleaved-Frequency-Division-Multiple-Access-, B-IFDMA-, Unterrahmenstruktur verwendet, wobei die B-IFDMA-Unterrahmenstruktur mehrere Verschachtelungen beinhaltet, die jeweils eine definierte Anzahl von Ressourcenblöcken umfassen, und eine oder mehrere Verschachtelungen für jede UE (1000) zugewiesen werden; und
Dekodieren, unter Verwendung eines oder mehrerer Prozessoren am eNodeB (1020), einer PRACH-Wellenform, die über die PRACH-Unterrahmenkonfiguration von der UE empfangen wurde,
**dadurch gekennzeichnet, dass** die B-IFDMA-Unterrahmenstruktur eine zufällige Verschachtelungsstruktur verwendet, um Mehrdeutigkeiten in einer Zeitschätzung zu reduzieren, wobei Ressourcenblöcke für jede Verschachtelung für eine oder mehrere UEs (1000) unter Verwendung eines nicht äquidistanten Ressourcenblockmusters konfiguriert sind.

9. Das mindestens eine maschinenlesbare Speichermedium nach Anspruch 8, wobei die PRACH-Unterrahmenkonfiguration von UEs (1000) verwendet wird, die in einem erweiterten Licensed-Assisted-Access-, LAA-, System oder in einem eigenständigen System betrieben werden, das in einem nicht lizenzierten Spektrum betrieben wird, ohne einen Anker in einem lizenzierten Spektrum zu verwenden.

10. Das mindestens eine maschinenlesbare Speichermedium nach einem der Ansprüche 8 bis 9, wobei:
die PRACH-Unterrahmenkonfiguration ein Schutzband verwendet, wenn die PRACH-Wellenform mit Übertragungen unter Verwendung eines Unterträgerabstands, der sich von dem der PRACH-Wellenform unterscheidet, frequenzmultiplexiert wird, wobei das Schutzband in jede Verschachtelung eingefügt ist, um Interferenz zu und von Übertragungen in umgebenden Verschachtelungen zu reduzieren, wobei das Schutzband eine definierte Anzahl von Unterträgern in Abhängigkeit von einer Zellengröße beinhaltet; oder
die PRACH-Unterrahmenkonfiguration kein Schutzband verwendet, wenn die mehrfachen Verschachtelungen zum Übertragen von PRACH-Wellenformen in einem speziellen Unterrahmen mit einem gleichen Unterträgerabstand verwendet werden.

11. Das mindestens eine maschinenlesbare Speichermedium nach einem der Ansprüche 8 bis 10, wobei:
die PRACH-Unterrahmenkonfiguration Symbole (k) und (k+1) beinhaltet, wobei k∈{0, 2, 4, 6, 8, 10, 12}, wenn die PRACH-Wellenform unter Verwendung eines Uplink-Unterrahmens übertragen wird, und k∈{0, 2} oder k=0, wenn die PRACH-Wellenform unter Verwendung eines speziellen Unterrahmens übertragen wird; und
Symbol (k) ein zyklisches Präfix, CP, beinhaltet und Symbol (k+1) eine zyklisch verschobene Version von Symbol (k) in einem Zeitbereich ist; oder
Symbol (k) ein zyklisches Präfix, CP, beinhaltet, und Symbol (k+1) eine Wiederholung von Symbol (k) ohne das CP ist, wobei das Symbol (k), das CP beinhaltet, verwendet wird, um Inter-Verschachtelungs-Interferenz zu reduzieren; oder
Symbol (k) eine erste PRACH-Wellenform beinhaltet und nachfolgende Symbole in einem Unterrahmen eine zweite PRACH-Wellenform beinhalten, die eine Wiederholung der ersten PRACH-Wellenform ist, wobei die erste und die zweite PRACH-Wellenform PRACH-Präambeln beinhalten, wobei die erste und die zweite PRACH-Wellenform einer CP-Dauer folgen, wobei die CP-Dauer abhängig ist von einer maximalen Verzögerungsspreizung und einer maximalen Umlaufverzögerung, wobei die CP-Dauer vordefiniert ist oder über eine Funkressourcensteuerung-, RRC-, Signalisierung konfiguriert wird.

## Revendications

1. Un appareil d'un eNodeB (1020) exploitable pour configurer un canal d'accès aléatoire physique, PRACH, pour permettre des communications de liaison montante par un équipement utilisateur, UE (1000), l'appareil comprenant un ou plusieurs processeurs et une mémoire configurés pour :
allouer, au niveau de l'eNodeB (1020), une configuration de sous-trame PRACH pour une pluralité d'UE qui utilise une structure de sous-trame d'accès multiple par répartition en fréquence entrelacée par blocs, B-IFDMA,
dans lequel la structure de sous-trame B-IFDMA comprend des blocs de ressources, RB, entrelacés assignés à chacun de la pluralité d'UE sur un nombre sélectionné de symboles ; et
décoder, au niveau de l'eNodeB, une forme d'onde PRACH reçue via la configuration de sous-trame PRACH en provenance de l'un de la pluralité d'UE ;
**caractérisé en ce que** la structure de sous-trame B-IFDMA utilise une structure d'entrelacement randomisé pour réduire des ambiguïtés dans une estimation de séquencement, dans lequel des blocs de ressources pour chaque entrelacement sont configurés pour un ou plusieurs UE (1000) en utilisant un motif de bloc de ressources à non-équidistance.

2. L'appareil selon la revendication 1, dans lequel :
la configuration de sous-trame PRACH est utilisée par des UE (1000) qui fonctionnent dans un système d'accès assisté sous licence, LAA, amélioré, ou dans un système autonome qui fonctionne dans un spectre sans licence sans utiliser une ancre dans un spectre sous licence ; ou
la forme d'onde PRACH reçue en provenance de l'UE (1000) est basée sur un préambule PRACH au format 0 ou au format 4, dans lequel la forme d'onde PRACH est transmise à l'UE via une sous-trame de liaison montante, dans lequel le préambule PRACH au format 4 est répété dans un domaine temporel lorsqu'il est transmis en utilisant la sous-trame de liaison montante.

3. L'appareil selon l'une quelconque des revendications 1 à 2, dans lequel :
la configuration de sous-trame PRACH utilise une bande de garde lorsque la forme d'onde PRACH est multiplexée en fréquence avec des transmissions utilisant un espacement de sous-porteuse qui est différent de celui de la forme d'onde PRACH, dans lequel la bande de garde est insérée à l'intérieur de chaque entrelacement de RB pour réduire l'interférence vers et depuis des transmissions dans des entrelacements environnants, dans lequel la bande de garde inclut un nombre défini de sous-porteuses en fonction d'une taille de cellule ; ou
la configuration de sous-trame PRACH n'utilise pas de bande de garde lorsque de multiples entrelacements de RB sont utilisés pour transmettre des formes d'onde PRACH dans une sous-trame spéciale avec un même espacement de sous-porteuse.

4. L'appareil selon l'une quelconque des revendications 1 à 3, dans lequel :
la configuration de sous-trame PRACH inclut des symboles (k) et (k+1), dans lequel k∈{0, 2, 4, 6, 8, 10, 12} lorsque la forme d'onde PRACH est transmise en utilisant une sous-trame de liaison montante complète et k∈{0, 2} ou k=0 lorsque la forme d'onde PRACH est transmise en utilisant une sous-trame spéciale, et un espacement de sous-porteuse est égal à 15 kilohertz (KHz) ; et
le symbole (k) inclut un préfixe cyclique, CP, et le symbole (k+1) est une version décalée cyclique du symbole (k) dans un domaine temporel ; ou
le symbole (k) inclut un préfixe cyclique, CP, et le symbole (k+1) est une répétition du symbole (k) sans le CP, dans lequel le symbole (k) qui inclut le CP est utilisé pour réduire l'interférence inter-entrelacement ; ou
le symbole (k) inclut une première forme d'onde PRACH et des symboles subséquents dans une sous-trame incluent une seconde forme d'onde PRACH qui est une répétition de la première forme d'onde PRACH, dans lequel les première et seconde formes d'onde PRACH incluent des préambules PRACH, dans lequel les première et seconde formes d'onde PRACH suivent une durée CP, dans lequel la durée CP dépend d'un étalement du temps de propagation maximal et d'un temps de propagation aller-retour maximal, dans lequel la durée CP est prédéfinie ou configurée via une signalisation de contrôle de ressource radio, RRC.

5. L'appareil selon l'une quelconque des revendications 1 à 4, dans lequel :
la forme d'onde PRACH inclut une séquence de préambule PRACH qui est répétée ou tronquée pour s'adapter à un nombre d'éléments de ressource alloués dans le domaine fréquentiel, dans lequel la séquence de préambule PRACH est indiquée en utilisant un ordre de canal de contrôle de liaison descendante physique, PDCCH, pour un PRACH sans contention, ou la séquence de préambule PRACH est indiquée via une indication de ressource de séquencement et de fréquence qui est configurée semi-statiquement via une signalisation de contrôle de ressource radio, RRC ; ou
la séquence de préambule PRACH est configurée via une signalisation RRC pour un PRACH basé sur la contention.

6. L'appareil selon l'une quelconque des revendications 1 à 5, dans lequel :
la forme d'onde PRACH est transmise en utilisant une région de slot de temps pilote de liaison montante, UpPTS, d'une sous-trame spéciale, et l'UpPTS inclut quatre symboles pour la transmission de la forme d'onde PRACH.

7. L'appareil selon l'une quelconque des revendications 1 à 6, dans lequel :
une écoute avant conversation, LBT, à un coup est effectuée lorsque la forme d'onde PRACH est transmise en utilisant une sous-trame spéciale ; ou
LBT n'est pas effectuée lorsqu'un intervalle entre la forme d'onde PRACH et une fin d'une transmission de liaison descendante précédente se trouve dans une durée définie ; ou
une LBT à un coup est effectuée lorsque la forme d'onde PRACH se trouve à l'intérieur ou à l'extérieur d'une opportunité de transmission, TxOP, et la forme d'onde PRACH est transmise sur une sous-trame de liaison montante complète.

8. Au moins un support de stockage lisible par machine sur lequel sont incorporées des instructions pour configurer un canal d'accès aléatoire physique, PRACH, pour un équipement utilisateur, UE (1000), les instructions lorsqu'elles sont exécutées par un ou plusieurs processeurs au niveau d'un eNodeB (1020) effectuent ce qui suit :
l'allocation, en utilisant un ou plusieurs processeurs au niveau de l'eNodeB (1020), d'une configuration de sous-trame PRACH qui utilise une structure de sous-trame d'accès multiple par répartition en fréquence entrelacée par blocs, B-IFDMA, dans lequel la structure de sous-trame B-IFDMA inclut de multiples entrelacements qui comprennent chacun un nombre défini de blocs de ressources, et un ou plusieurs entrelacements sont alloués pour chaque UE (1000) ; et
le décodage, en utilisant les un ou plusieurs processeurs au niveau de l'eNodeB (1020), d'une forme d'onde PRACH reçue en provenance de l'UE via la configuration de sous-trame PRACH,
**caractérisé en ce que** la structure de sous-trame B-IFDMA utilise une structure d'entrelacement randomisé pour réduire des ambiguïtés dans une estimation de séquencement, dans lequel des blocs de ressources pour chaque entrelacement sont configurés pour un ou plusieurs UE (1000) en utilisant un motif de bloc de ressources à non-équidistance.

9. L'au moins un support de stockage lisible par machine selon la revendication 8, dans lequel la configuration de sous-trame PRACH est utilisée par des UE (1000) qui fonctionnent dans un système d'accès assisté sous licence, LAA, amélioré, ou dans un système autonome qui fonctionne dans un spectre sans licence sans utiliser une ancre dans un spectre sous licence.

10. L'au moins un support de stockage lisible par machine selon l'une quelconque des revendications 8 à 9, dans lequel :
la configuration de sous-trame PRACH utilise une bande de garde lorsque la forme d'onde PRACH est multiplexée en fréquence avec des transmissions utilisant un espacement de sous-porteuse qui est différent de celui de la forme d'onde PRACH, dans lequel la bande de garde est insérée à l'intérieur de chaque entrelacement pour réduire l'interférence vers et depuis des transmissions dans des entrelacements environnants, dans lequel la bande de garde inclut un nombre défini de sous-porteuses en fonction d'une taille de cellule ; ou
la configuration de sous-trame PRACH n'utilise pas de bande de garde lorsque de multiples entrelacements sont utilisés pour transmettre des formes d'onde PRACH dans une sous-trame spéciale avec un même espacement de sous-porteuse.

11. L'au moins un support de stockage lisible par machine selon l'une quelconque des revendications 8 à 10, dans lequel :
la configuration de sous-trame PRACH inclut des symboles (k) et (k+1), dans lequel k∈{0, 2, 4, 6, 8, 10, 12} lorsque la forme d'onde PRACH est transmise en utilisant une sous-trame de liaison montante et k∈{0, 2} ou k=0 lorsque la forme d'onde PRACH est transmise en utilisant une sous-trame spéciale ; et
le symbole (k) inclut un préfixe cyclique, CP, et le symbole (k+1) est une version décalée cyclique du symbole (k) dans un domaine temporel ; ou
le symbole (k) inclut un préfixe cyclique, CP, et le symbole (k+1) est une répétition du symbole (k) sans le CP, dans lequel le symbole (k) qui inclut le CP est utilisé pour réduire l'interférence inter-entrelacement ;
ou
le symbole (k) inclut une première forme d'onde PRACH et des symboles subséquents dans une sous-trame incluent une seconde forme d'onde PRACH qui est une répétition de la première forme d'onde PRACH, dans lequel les première et seconde formes d'onde PRACH incluent des préambules PRACH, dans lequel les première et seconde formes d'onde PRACH suivent une durée CP, dans lequel la durée CP dépend d'un étalement du temps de propagation maximal et d'un temps de propagation aller-retour maximal, dans lequel la durée CP est prédéfinie ou configurée via une signalisation de contrôle de ressource radio, RRC.
